# EUROPEAN PATENT APPLICATION

(11) **EP 4 518 042 A1**
(43) Date of publication of application: **05.03.2025**
(21) Application number: 24166978.7
(22) Date of filing: 27.03.2024
(51) Int. Cl.: H01R 13/629, H01R 13/64

(54) **ENERGY STORAGE CONNECTOR**

(30) Priority: 31.08.2023 CN 202311111035; 31.08.2023 CN 202322363994 U; 31.08.2023 CN 202322352322 U; 31.08.2023 CN 202322357329 U
(71) Applicant: Jiangxi Jinko PV Material Co., Ltd., Shangrao, Jiangxi 334100 (CN)
(72) Inventor: CHENG, Hanxiao, Shangrao, 334100 (CN); LAI, Cunfa, Shangrao, 334100 (CN); ZHOU, Dequan, Shangrao, 334100 (CN)
(74) Representative: Balder IP Law, S.L.

(57) **Abstract**

Embodiments of the present disclosure relate to the technical field of electronic products, and in particular to an energy storage connector, including a male connector and a female connector configured to connect to each other. The male connector has a connector housing arranged on a side facing to the female connector, the connector housing has a hollow structure and an inner surface, and the inner surface has at least two engagement grooves arranged at intervals along a circumferential direction of the inner surface. The female connector has an engagement portion configured to cooperate with the connector housing, the engagement portion has an outer surface and at least one tooth formed on the outer surface along a circumferential direction of the outer surface, and the at least one tooth is configured to engage with the at least two engagement grooves. An end of each tooth of the at least one tooth away from the male connector is flush with an end of the engagement portion away from the male connector, and each tooth of the at least one tooth has a length smaller than a length of the engagement portion in a first direction. The first direction refers to a direction directing from the female connector to the male connector. With the energy storage connector according to the present disclosure, the engagement structure and engagement angle between the male connector and the female connector can be flexibly adjusted according to different usage scenarios, thereby preventing abnormal contact and unstable connection between load equipment and energy storage equipment, and preventing waste of time due to repeatedly unlocking and adjusting, by the user of the energy storage connector, the male connector and/or the female connector to find proper engagement angle.

## Description

### TECHNICAL FIELD

Embodiments of the present disclosure relate to the technical field of electronic products, and in particular to an energy storage connector.

### BACKGROUND

An energy storage connector is a connector used in an energy storage system, and is configured to connect an energy storage apparatus, a battery pack, an inverter, or other related apparatuses to each other.

An existing energy storage connector generally includes a male connector, a female connector, and a button unlocking structure. The male connector and the female connector are generally implemented as a straight plug-and-draw connection structure, and the straight plug-and-draw connection structure may be implemented as a rotatable connection structure or a non-rotatable connection structure. The button unlocking structure usually includes three parts: a button, a spring, and a retainer plate.

Regarding the rotatable connection structure, the male connector and the female connector can still rotate relative to each other after connection therebetween, resulting in abnormal contact of the energy storage connector. Regarding the non-rotatable connection structure, the male connector and the female connector cannot rotate relative to each other after connection therebetween, resulting in failure of flexible adjustment of the straight plug-and-draw connection structure formed by the male connector and the female connector according to different usage scenarios. Moreover, the energy storage connector using the above button unlocking structure has low overall degree of compatibility and complex process operations, leading to waste of manpower.

Therefore, it is urgent to provide an energy storage connector to solve the above problems.

### SUMMARY

Embodiments of the present disclosure are intended to provide an energy storage connector, in order to at least address the above-mentioned problems.

Some embodiments of the present disclosure provide an energy storage connector, including a male connector and a female connector configured to connect to each other. The male connector has a connector housing arranged on a side facing to the female connector, the connector housing has a hollow structure and an inner surface, and the inner surface has at least two engagement grooves arranged at intervals along a circumferential direction of the inner surface. The female connector has an engagement portion configured to cooperate with the connector housing and a base attached to the engagement portion, the engagement portion has a first side facing the male connector, a second side away from the male connector and abutting the base, an outer surface and at least one tooth formed on the outer surface and arranged along a circumferential direction of the outer surface, and the at least one tooth is configured to engage with the at least two engagement grooves. Each tooth of the at least one tooth has opposing first and second ends, the first end is away from the male connector and is flush with the second side of the engagement portion, and each tooth of the at least one tooth has a length between the opposing first and second ends that is smaller than a length of the engagement portion in a first direction. The first direction refers to a direction directing from the second side to the first side of the engagement portion.

### BRIEF DESCRIPTION OF THE DRAWINGS

One or more embodiments are exemplarily illustrated in reference to corresponding accompanying drawing(s), and these exemplary illustrations do not constitute limitations on the embodiments. The components denoted by the same or similar reference numerals in the accompanying drawings indicate the same or similar components. Unless otherwise stated, the accompanying drawings do not constitute scale limitations.
FIG. 1 is a structural schematic diagram along a direction of an energy storage connector according to a first aspect of the present disclosure.
FIG. 2 is a structural schematic diagram of a part of a male connector according to the first aspect of the present disclosure.
FIG. 3 is a structural schematic diagram of the male connector, an elastic component and a button before assembly according to the first aspect of the present disclosure.
FIG. 4 is a structural schematic diagram along a direction of the button according to the first aspect of the present disclosure.
FIG. 5 shows a usage state of the button and a part of a female connector according to the first aspect of the present disclosure.
FIG. 6 is a structural schematic diagram along another direction of the button according to the first aspect of the present disclosure.
FIG. 7 is a structural schematic diagram of the male connector according to the first aspect of the present disclosure.
FIG. 8 is a structural schematic diagram along a direction of the female connector according to the first aspect of the present disclosure.
FIG. 9 is a structural schematic diagram of the energy storage connector according to the first aspect of the present disclosure.
FIG. 10 is a structural schematic diagram along a direction of a part of the male connector according to the first aspect of the present disclosure.
FIG. 11 is an enlarged view of some structures in FIG. 10.
FIG. 12 is an enlarged view of some structures in FIG. 8.
FIG. 13 is a structural schematic diagram along another direction of the female connector according to the first aspect of the present disclosure.
FIG. 14 is a cross-section view of some structures of the energy storage connector being in a pre-engagement state according to the first aspect of the present disclosure.
FIG. 15 is a cross-section view of some structures of the energy storage connector being in an engagement state according to the first aspect of the present disclosure.
FIG. 16 is an exploded view of an installation panel, a sealing gasket, an abutting portion, a base, a fixing portion, and a male connector of an energy storage connector according to a second aspect of the present disclosure.
FIG. 17 is a cross-section view of structures of the sealing gasket, the installation panel, the base, and bolts according to the second aspect of the present disclosure.
FIG. 18 is an exploded view of the fixing portion, the base, the abutting portion, the sealing gasket, and the installation panel according to the second aspect of the present disclosure.
FIG. 19 is an enlarged view of portion A in FIG. 18.
FIG. 20 is a cross-section view of an energy storage connector according to a third aspect of the present disclosure.
FIG. 21 is a cross-section view of a first male connector of the energy storage connector according to the third aspect of the present disclosure.
FIG. 22 is a cross-section view of a first female connector of the energy storage connector according to the third aspect of the present disclosure.
FIG. 23 is a cross-section view of a second male connector of the energy storage connector according to the third aspect of the present disclosure.
FIG. 24 is a cross-section view of a second female connector of the energy storage connector according to the third aspect of the present disclosure.
FIG. 25 is a schematic diagram of a first fixing plate and a second fixing plate of the energy storage connector according to the third aspect of the present disclosure.
FIG. 26 is a schematic diagram showing engagement of a positive male connector and a negative female connector of the energy storage connector according to the third aspect of the present disclosure.
FIG. 27 is a schematic diagram showing engagement of a negative male connector and a positive female connector of the energy storage connector according to the third aspect of the present disclosure.
FIG. 28 is a schematic diagram of the structure of the energy storage connector according to the second aspect of the present disclosure.

### DETAILED DESCRIPTION OF THE EMBODIMENTS

Various exemplary embodiments of the present disclosure will be described in detail with reference to the accompanying drawings. It should be noted that, unless otherwise specified, the relative arrangement, numerical expressions, and values of the components and steps described in these embodiments do not limit the scope of the present disclosure.

The following description of at least one exemplary embodiment is only for illustrative purposes and shall not be construed as any limitation on the present disclosure and its application or usage.

The techniques, methods, and equipment known to those skilled in the art may not be described in detail, but in appropriate scenarios, such techniques, methods, and equipment should be considered as a part of the description.

In the examples shown and described herein, any specific value should be interpreted as merely illustrative and not as a limitation. Therefore, other examples of exemplary embodiments may have different values.

It should be noted that similar reference numerals represent similar terms in the following drawings. Thus, once a term is defined in a drawing, it does not need to be further described in subsequent drawings.

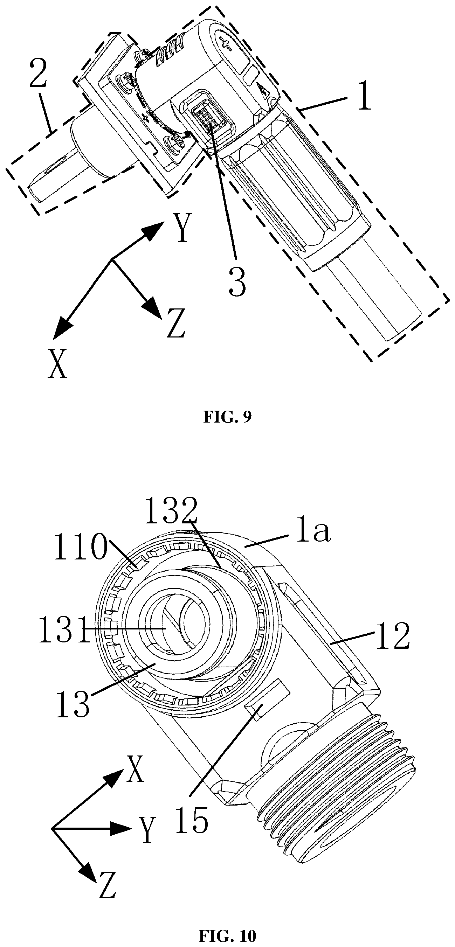

Referring to FIGS. 9 to 13, a first aspect of the present disclosure provides an energy storage connector, including a male connector 1 and a female connector 2 configured to connect to each other. The male connector 1 has a connector housing 1a arranged on a side facing to the female connector 2, the connector housing 1a has a hollow structure and an inner surface, and the inner surface has at least two engagement grooves 110 arranged at intervals along a circumferential direction of the inner surface. The female connector 2 has an engagement portion 25 configured to cooperate with the connector housing 1a and a base 24 attached to the engagement portion, the engagement portion 25 has a first side facing the male connector 1, a second side away from the male connector 1 and abutting the base 24, an outer surface between the first side and the second side, and at least one tooth 210 formed on the outer surface and arranged along a circumferential direction of the outer surface, and the at least one tooth 210 is configured to engage with the at least two engagement grooves 110. Each tooth of the at least one tooth 210 has opposing first and second ends, the first end is away from the male connector 1 and is flush with the second side of the engagement portion 25, and each tooth of the at least one tooth 210 has a length between the opposing first and second ends that is smaller than a length of the engagement portion 25 in a first direction Y. The first direction Y refers to a direction directing from the second side to the first side of the engagement portion 25.

Referring to FIG. 9, the energy storage connector according to the first aspect of the present disclosure implements a circuit by connecting electrical components to a power source. The energy storage connector has functions of carrying power and data, allowing electronic devices to operate, conducting current, and the like.

Referring to FIG. 9, the energy storage connector according to the first aspect of the present disclosure includes the male connector 1 and the female connector 2 configured to connect to each other. Due to the fact that the male connector 1 and the female connector 2 are configured to connect to a circuit, the internal structures of the male connector 1 and the female connector 2 configured to connect to the circuit may be made of metal materials, including, but not limited to, copper, aluminum, or copper alloys. Copper has advantages such as hardness, wear resistance, good ductility, and corrosion resistance. Aluminum has advantages such as strong corrosion resistance, wear resistance, weather resistance, and high hardness. Copper alloys have advantages such as low cost, good mechanical properties and corrosion resistance, and beautiful color and appearance. Due to the fact that housings of the male connector 1 and the female connector 2 are used to insulate current and prevent leakage, the housings of the male connector 1 and the female connector 2 shall be made of insulating materials, such as plastic, rubber, or the like. The materials and manufacturing methods of the male connector 1 and the female connector 2 belong to prior art in the art and will not be described in detail here.

Referring to FIG. 9, the male connector 1 is one end of the energy storage connector and is used to connect with an energy source (not shown in the drawings) or load equipment (not shown in the drawings). The female connector 2 is the other end of the energy storage connector and is used to connect with energy storage equipment (not shown in the drawings). Power transmission between the male connector 1 and the female connector 2 is achieved by metal contact.

Referring to FIGS. 9 to 11, the male connector 1 has a connector housing 1a arranged on a side facing to the female connector 2, and the connector housing 1a has a hollow structure. The connector housing 1a has a conductive terminal 13 arranged inside the connector housing 1a. The conductive terminal 13 is used to implement electrical connection between the male connector 1 and the female connector 2, and the connector housing 1a is used to protect the conductive terminal 13 as well as to implement the connection between the male connector 1 and the female connector 2. In a first direction Y, a length of the connector housing 1a is smaller than a length of the conductive terminal 13, where the first direction Y refers to a direction directing from the female connector 2 to the male connector 1. A cross section of the connector housing 1a along the first direction Y and a cross section of the conductive terminal 13 along the first direction Y are annular. A first groove 131 is formed by an interior of the conductive terminal 13, a second groove 132 is formed between an outer surface of the conductive terminal 13 and the connector housing 1a, both the first groove 131 and the second groove 132 are used to be connected with the female connector 2. The inner surface of the connector housing 1a has at least two engagement grooves 110 arranged at intervals along a circumferential direction of the inner surface, and the inner surface is located in the second groove 132.

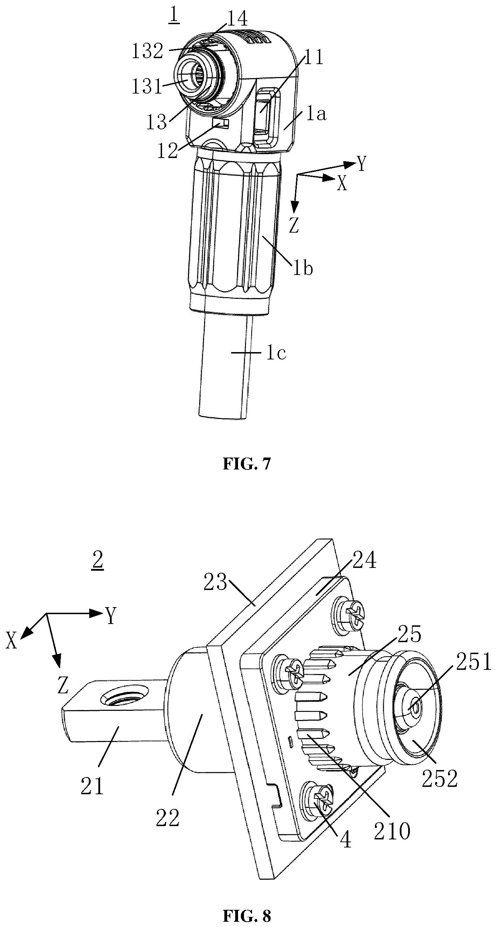

Referring to FIGS. 8, 9, 12 and 13, the female connector 2 has an engagement portion 25 configured to cooperate with the connector housing 1a and a base 24 attached to the engagement portion. The engagement portion 25 has a connection plug 251 arranged inside the engagement portion 25, and the connection plug 251 is configured to implement electrical connection between the male connector 1 and the female connector 2. The engagement portion 25 is used to protect the connection plug 251 as well as to implement the connection between the male connector 1 and the female connector 2. In the first direction Y, a length of the connection plug 251 is smaller than a length of the engagement portion 25. A cross section of the engagement portion 25 along the first direction Y is annular, and a cross section of the connection plug 251 along the first direction Y is solid circle. A third groove 252 is formed between an outer surface of the connection plug 251 and the engagement portion 25. The third groove 252 is configured for the connection with the male connector 1. The female connector 2 further includes a base 24, a sealing seat 23, an abutting portion 22 and a connection terminal 21 that are sequentially connected to each other along the first direction Y. The base 24 is located between the engagement portion 25 and the sealing seat 23. The sealing seat 23 and the base 24 may be connected to each other by connecting components 4, and the connecting components 4 may be bolts. The connection terminal 21 and the connection plug 251 are electrically connected to each other. The engagement portion 25 has at least one tooth 210 formed on the outer surface and arranged along the circumferential direction of the outer surface, and the at least one tooth 210 is configured to engage with the at least two engagement grooves 110. The outer surface is located on a side of the engagement portion 25 away from the connection plug 251.

Referring to FIGS. 8 to 10, a process of connecting the male connector 1 to the female connector 2 is as follows: first, aligning the connection plug 251 with the first groove 131, aligning the engagement portion 25 with the second groove 132, aligning the conductive terminal 13 with the third groove 252, and moving the male connector 1 and the female connector 2 towards each other. During this, the male connector 1 and the female connector 2 may be adaptively rotated according to actual situations to adjust engagement angle between the male connector 1 and the female connector 2. Second, engaging the teeth 210 into the engagement grooves 110, and at this time, the male connector 1 and the female connector 2 cannot rotate anymore. With the cooperation of the connection plug 251, the first groove 131, the engagement portion 25, the second groove 132, the conductive terminal 13 and the third groove 252, the connection between the male connector 1 and the female connector 2 is implemented. With the cooperation of the teeth 210 and the engagement grooves 110, the male connector 1 and the female connector 2 are locked to each other, and the engagement angle between the male connector 1 and the female connector 2 is fixed, thereby preventing rotation of the male connector 1 and/or the female connector 2 during usage of the energy storage connector, and the resulted unstable connection between load equipment and energy storage equipment.

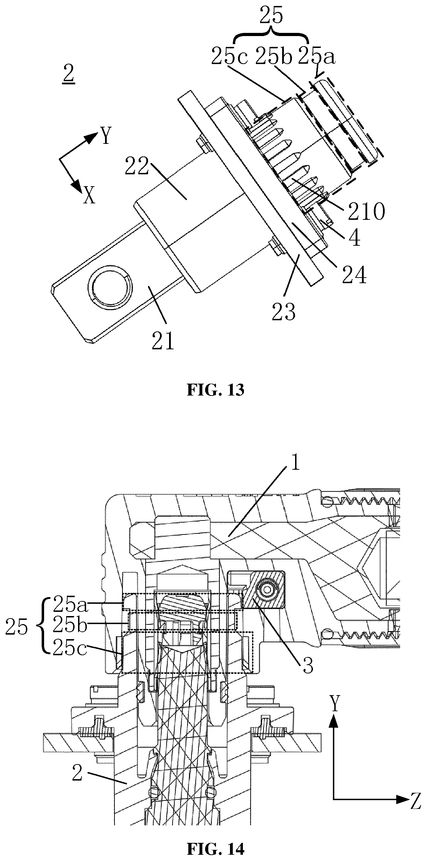

Referring to FIGS. 9 and 13, each tooth 210 has opposing first and second ends, the first end is away from the male connector 1 and is flush with the second side of the engagement portion 25, and each tooth 210 has a length between the opposing first and second ends that is smaller than a length of the engagement portion 25 in the first direction Y. In this way, it can be ensured that at the start of engaging the male connector 1 with the female connector 2, the teeth 210 do not engage in the engagement grooves 110. At this time, the engagement angle between the male connector 1 and the female connector 2 can be adjusted by rotating the male connector 1 and/or the female connector 2. The teeth 210 will not engage in the engagement grooves 110 until the engagement angle between the male connector 1 and the female connector 2 is adjusted to be proper. At last, the male connector 1 and the female connector 2 are locked to prevent the male connector 1 and/or the female connector 2 from rotating, thereby preventing waste of time due to repeatedly unlocking and adjusting, by the user of the energy storage connector, the male connector 1 and/or the female connector 2 to find proper engagement angle.

In some embodiments, in the first direction Y, a ratio of a length of one respective tooth of the at least one tooth 210 to a length of the engagement portion 25 ranges from 0.312 to 0.337.

Referring to FIGS. 9, 11 and 13, when in the first direction Y, the ratio of the length of one respective tooth 210 to the length of the engagement portion 25 is less than 0.312, the at least one tooth 210 has an excessively small length, leading to relatively small cooperation areas between the at least one tooth 210 and the engagement grooves 110, such that the male connector 1 cannot be locked to the female connector 2. When in the first direction Y, the ratio of the length of one respective tooth 210 to the length of the engagement portion 25 is greater than 0.337, the at least one tooth 210 has an excessively large length, affecting adjustment of the engagement angle between the male connector 1 and the female connector 2. Therefore, the ratio of the length of one respective tooth 210 in the first direction Y to the length of the engagement portion 25 in the first direction Y is set within a range of 0.312 to 0.337. In this way, excessively short teeth 210 which cannot lock the male connector 1 to the female connector 2 can be prevented. Moreover, excessively long teeth 210 which affect adjustment of the engagement angle between the male connector 1 and the female connector 2 also can be prevented. In the first direction Y, the ratio of the length of one respective tooth 210 to the length of the engagement portion 25 may be 0.312, 0.317, 0.322, 0.327, 0.332, 0.337, or the like.

It should be noted that in some other embodiments, the range of the ratio of the length of one respective tooth 210 to the length of the engagement portion 25 may be adaptively adjusted according to actual situations, and will not be limited herein.

In some embodiments, in response to one respective tooth of the at least one tooth 210 engaging into a corresponding engagement groove of the at least two engagement grooves 110, there is a gap between the one respective tooth 210 and a side wall 120 of the corresponding engagement groove 110, and a width of the gap along the circumferential direction of the inner surface ranges from 0.15mm to 0.25mm.

Referring to FIGS. 9, 11 and 12, when one respective tooth of the at least one tooth 210 engages into a corresponding engagement groove of the at least two engagement grooves 110, there is a gap between the one respective tooth 210 and the side wall 120 of the corresponding engagement groove 110. When the width of the gap along the circumferential direction of the inner surface is less than 0.15mm, engagement between the one respective tooth 120 and the corresponding engagement groove 110 is too tight, making it difficult to disengage. When the width of the gap along the circumferential direction of the inner surface is greater than 0.25mm, engagement between the one respective tooth 120 and the corresponding engagement groove 110 is too loose, making the male connector 1 easy to disengage from the female connector 2, thereby affecting the circuit. Therefore, the width of the gap along the circumferential direction of the inner surface is set within the range of 0.15mm to 0.25mm. In this way, too tight engagement between the one respective tooth 120 and the corresponding engagement groove 110 which leads to difficult disengagement can be prevented. Moreover, engagement between the one respective tooth 120 and the corresponding engagement groove 110 can be prevented from being too loose, thereby preventing the male connector 1 from being easy to disengage from the female connector 2, and preventing the impact on the circuit. The width of the gap along the circumferential direction of the inner surface may be 0.15mm, 0.17mm, 0.19mm, 0.21mm, 0.23mm, 0.25mm, or the like.

It should be noted that in some other embodiments, the width of the gap along the circumferential direction of the inner surface may be adaptively adjusted according to actual situations, and will not be limited herein.

In some embodiments, a number of the at least one tooth 210 is 20.

Referring to FIG. 8, the number of the at least one tooth 210 may be 20. The teeth are formed on the outer surface of the engagement portion 25 along the circumferential direction of the outer surface, that is to say, one tooth is formed per 18°. The number of the teeth 210 is inversely proportional to an angle between adjacent teeth 210. The more teeth 210 there are, the smaller the angle between adjacent teeth 210.

It should be noted that in some other embodiments, the number of the at least one tooth 210 may be adaptively adjusted according to actual situations, and will not be limited herein.

In some embodiments, a width of a cross section along the first direction Y of one respective tooth of the at least one tooth 210 ranges from 1.49mm to 1.69mm.

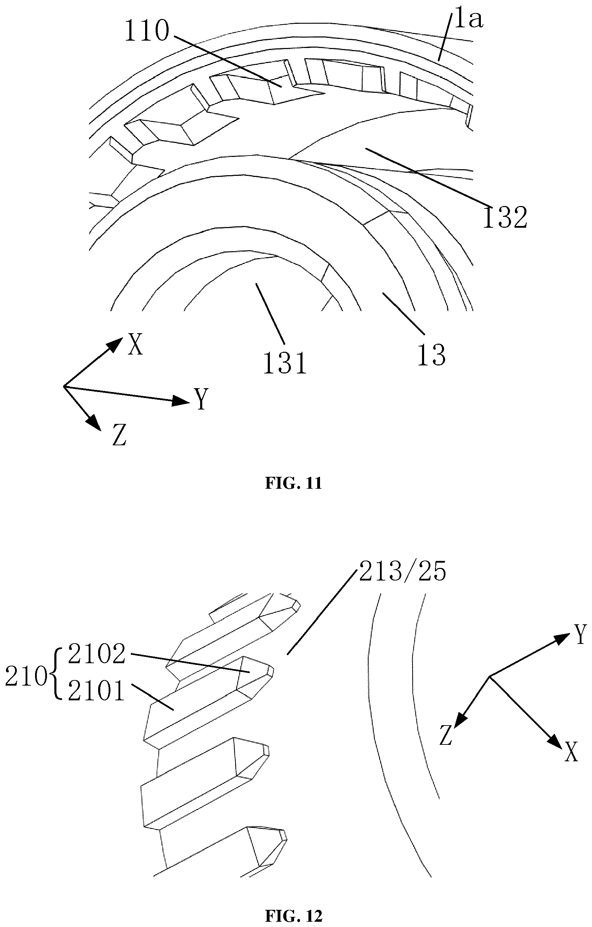

Referring to FIGS. 8 and 12, each respective tooth 210 includes a first segment 2101 and a second segment 2102 connected to the first segment 2101. In the first direction Y, the first segment 2101 is close to the base 24, and the second segment 2102 is far away from the base 24. A shape of a main body of the first segment 2101 is rectangular, and a main body of the second segment 2102 is shaped as a pyramid. In the first direction Y, a width of a cross section of a portion of the second segment 2102 close to the first segment 2101 is larger than a width of a cross section of a portion of the second segment 2102 away from the first segment 2101. The first segment 2101 is mainly used to engage with the corresponding engagement groove 110, and the second segment 2102 is mainly used to guide during the engagement of the female connector 2 and the male connector 1, so that the respective tooth 210 can be smoothly aligned with and engage in the corresponding engagement groove 110.

Referring to FIGS. 8 and 12, the width of the cross section along the first direction Y of the respective tooth 210 may be interpreted as a width of a cross section along the first direction Y of the first segment 2101. When the width of the cross section along the first direction Y of the respective tooth 210 is less than 1.49mm, the respective tooth 210 is too narrow, leading to increased difficulty in process. When the width of the cross section along the first direction Y of the respective tooth 210 is greater than 1.69mm, the respective tooth 210 is too wide, leading to decreased number of teeth 210, and to loose engagement between the female connector 2 and the male connector 1. Therefore, the width of the cross section along the first direction Y of the respective tooth 210 is set within the range of 1.49mm to 1.69mm. In this way, too narrow teeth 210 and increased difficulty in process can be prevented. Moreover, too wide teeth 210 and decreased number of teeth 210 also can be prevented, thereby solving the problem that engagement between the female connector 2 and the male connector 1 is loose. The width of the cross section along the first direction Y of the respective tooth 210 may be 1.49mm, 1.54mm, 1.59mm, 1.64mm, 1.69mm, or the like.

It should be noted that in some other embodiments, the width of the cross section along the first direction Y of the respective tooth 210 may be adaptively adjusted according to actual situations, and will not be limited herein.

In some embodiments, the at least two engagement grooves 110 and the at least one tooth 210 extend along the first direction Y.

Referring to FIGS. 9, 11 and 12, the at least two engagement grooves 110 and the at least one tooth 210 extend along the first direction Y. In this way, the engagement of the male connector 1 and the female connector 2 can be simplified, thereby ensuring the engagement therebetween when inserting the male connector 1 to the female connector 2, and preventing complex processes.

In some embodiments, the energy storage connector has a pre-engagement state and an engagement state. When the energy storage connector is in the pre-engagement state, the at least two engagement grooves 110 are separated from the at least one tooth 210, and when the energy storage connector is in the engagement state, the at least two engagement grooves 110 engage with the at least one tooth 210.

Referring to FIGS. 8, 10 and 14, when the energy storage connector is in the pre-engagement state, the connection plug 251 is engaged in the first groove 131, the engagement portion 25 is engaged in the second groove 132, and the conductive terminal 13 is engaged in the third groove 252. The male connector 1 and the female connector 2 are moved towards each other. At this time, the at least two engagement grooves 110 have not been engaged with the at least one tooth 210, and the male connector 1 and/or the female connector 2 can be freely rotated. By adjusting the engagement angle between the male connector 1 and the female connector 2, an appropriate position of the energy storage connector in the circuit can be ensured, thereby preventing instability of the circuit caused by incorrect engagement angle between the male connector 1 and the female connector 2, and preventing waste of time due to repeatedly unlocking and adjusting, by the user of the energy storage connector, the male connector 1 and/or the female connector 2 to find proper engagement angle.

Referring to FIGS. 8, 10 and 15, when the energy storage connector is in the engagement state, the at least one tooth 210 have been engaged with the at least two engagement grooves 110, and the male connector 1 and the female connector 2 are locked to each other through the cooperation of the at least one tooth 210 and the at least two engagement grooves 110. The male connector 1 and/or the female connector 2 can rotate no longer, thereby fixing the engagement angle between the male connector 1 and the female connector 2 and relative positions of the male connector 1 and the female connector 2 in the circuit.

By designing the pre-engagement state and the engagement state, repeatedly unlocking and adjusting, by the user of the energy storage connector, the male connector and the female connector due to improper engagement angles can be prevented, thereby reducing the burden on the user.

In some embodiments, the male connector 1 has a button 3 and a cavity 11 defined along a second direction X intersecting with the first direction Y, and the button 3 is arranged in the cavity 11. The button 3 is configured to lock or unlock the female connector 2, and when the energy storage connector is in the engagement state, the engagement portion 25 engages with the button 3.

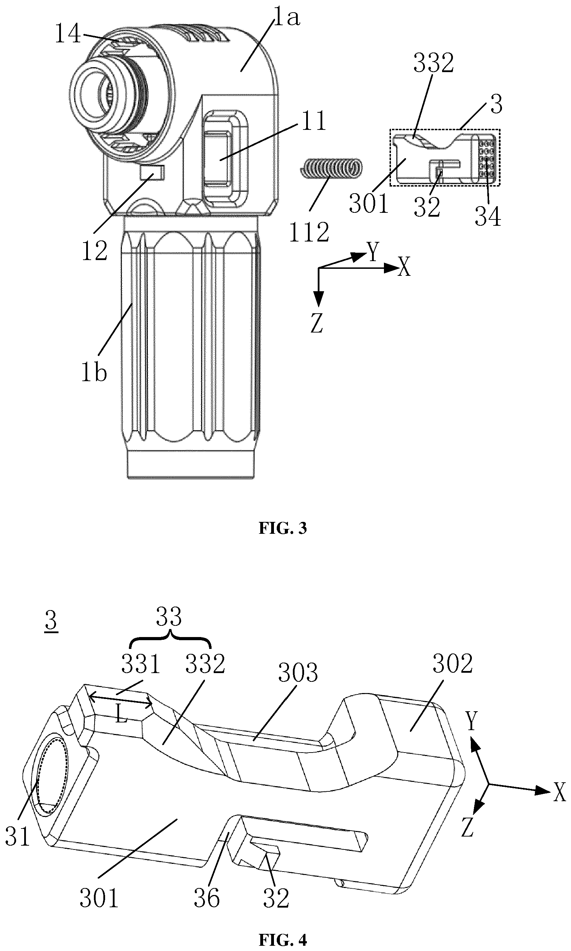

Referring to FIG. 3, the male connector 1 has a cavity 11 defined along the second direction X intersecting with the first direction Y. In some embodiments, the second direction X is perpendicular to the first direction Y, and the second direction X may refer to a direction along which the button 3 is ejected from the male connector 1. The cavity 11 is configured to receive the button 3, and a shape of the cavity 11 may be a cuboid. With the button 3, the male connector 1 and the female connector 2 can be locked to or separated from each other. The button 3 may be made of materials such as plastic or rubber. Plastic has advantages such as light weight, stable chemical properties, corrosion resistance, impact resistance, good insulation, and low processing cost. Rubber has advantages such as elasticity, wear resistance, cold resistance, resistance to air leakage, good insulation and durability, and prevention of current leakage. The materials and manufacturing methods of the button 3 belong to prior art in the art and will not be described in detail here.

Referring to FIGS. 8, 10 and 15, when the energy storage connector is in the engagement state, a part of the engagement portion 25 is engaged in the second groove 132, and the engagement portion 25 is engaged with the button 3. In this way, the engagement portion 25 can be limited by the button 3, thereby preventing the engagement portion 25 from disengaging from the male connector 1.

Referring to FIG. 7, the male connector 1 further includes a cable fastener 1b and a cable 1c, and the cable fastener 1b is arranged between the connector housing 1a and the cable 1c. The connector housing 1a, the cable fastener 1b and the cable 1c are arranged along a third direction Z. The third direction Z intersects with the first direction Y and with the second direction X. In some embodiments, any one of the third direction Z, the first direction Y and the second direction X is perpendicular to the other two. The conductive terminal 13 is electrically connected to the cable 1c, thereby achieving the conductivity function of the energy storage connector. The cable fastener 1b is used to fix and fasten the connector housing 1a and the cable 1c.

In some embodiments, along the first direction Y, the engagement portion 25 includes a first portion 25a, a second portion 25b and a third portion 25c connected to each other, and the at least one tooth 210 is formed on the third portion 25c. The second portion 25b has an outer diameter smaller than an outer diameter of the first portion 25a, and the third portion 25c has an outer diameter larger than the outer diameter of the second portion 25b. When the energy storage connector is in the engagement state, the second portion 25b engages with the button 3.

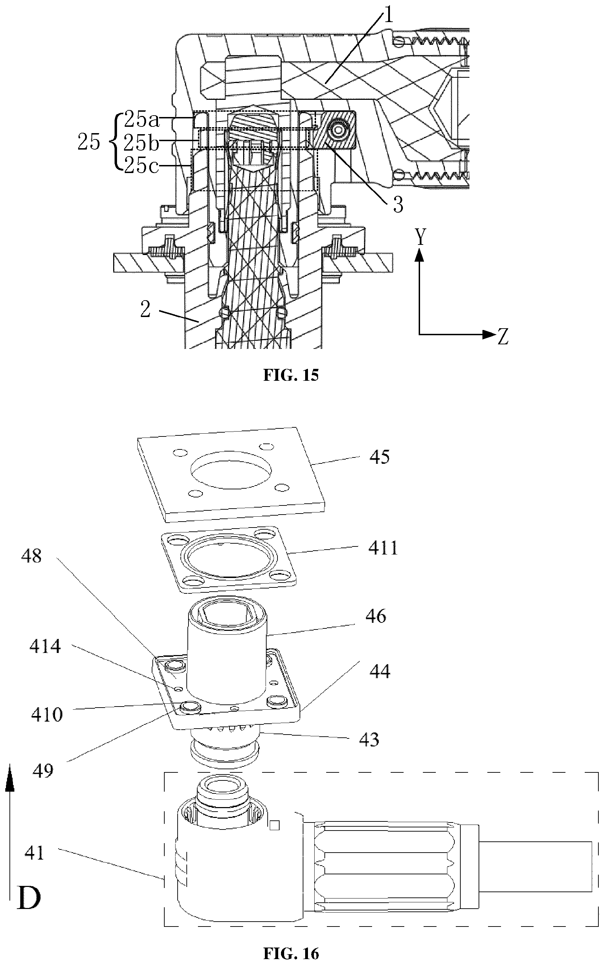

Referring to FIGS. 13 and 15, along the first direction Y, the engagement portion 25 includes a first portion 25a, a second portion 25b and a third portion 25c connected to each other. The first portion 25a is located away from the base 24, the third portion 25c is located close to the base 24, and the at least one tooth 210 is formed on the third portion 25c. In this way, it can be ensured that at the start of engaging the male connector 1 with the female connector 2, the teeth 210 do not engage in the engagement grooves 110, thereby facilitating adjustment of the engagement angle between the male connector 1 and the female connector 2.

Referring to FIGS. 13 and 15, the second portion 25b has an outer diameter smaller than an outer diameter of the first portion 25a, and the third portion 25c has an outer diameter larger than the outer diameter of the second portion 25b. In this way, when the energy storage connector is in the engagement state, a part of the engagement portion 25 can be located in the male connector 1, and the second portion 25b is engaged with the button 3. Thus, the engagement portion 25 can be limited by the button 3, thereby preventing the engagement portion 25 from disengaging from the male connector 1.

In some embodiments, the button 3 includes a locking structure 33 configured to lock or unlock. In the first direction Y, the locking structure 33 has a length smaller than a length of the button 3, and the length of the locking structure 33 is equal to a length of the second portion 25b.

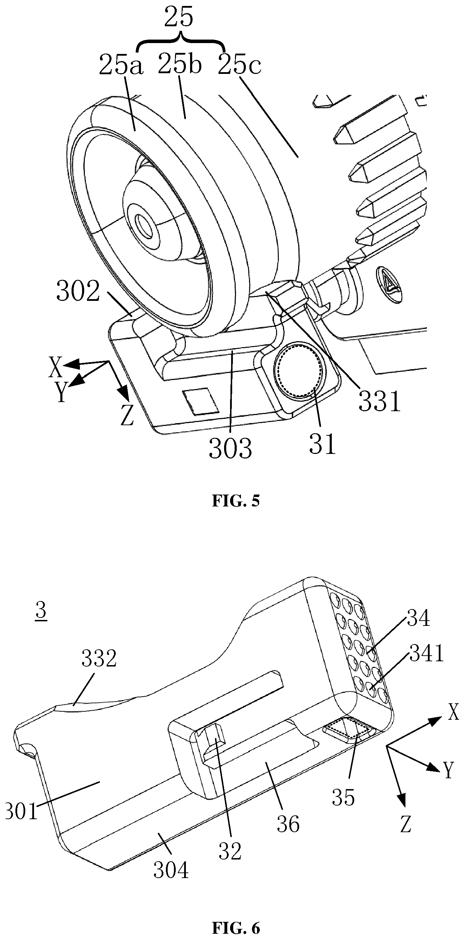

Referring to FIGS. 4 and 5, the button 3 includes the locking structure 33 configured to lock or unlock. The locking structure 33 has a locking portion 331 and a connection portion 332 connected to the locking portion 331. The locking structure 33 is used to implement locking and unlocking of the male connector 1 and the female connector 2. When the male connector 1 is engaged in the female connector 2, a part of the engagement portion 25 is engaged in the male connector 1, thus the locking structure 33 can cooperate with the engagement portion 25. The locking portion 331 is engaged with the second portion 25b of the engagement portion 25, and the connection portion 332 abuts on an edge of the third portion 25c close to the second portion 25b. In the first direction Y, the locking structure 33 has a length smaller than a length of the button 3, and the length of the locking structure 33 is equal to a length of the second portion 25b. In this way, the engagement portion 25 can be held by the locking structure 33 along the first direction Y, thereby preventing the female connector 2 from disengaging from the male connector 1. By providing the locking structure 33, locking and unlocking between the male connector 1 and the female connector 2 can be implemented.

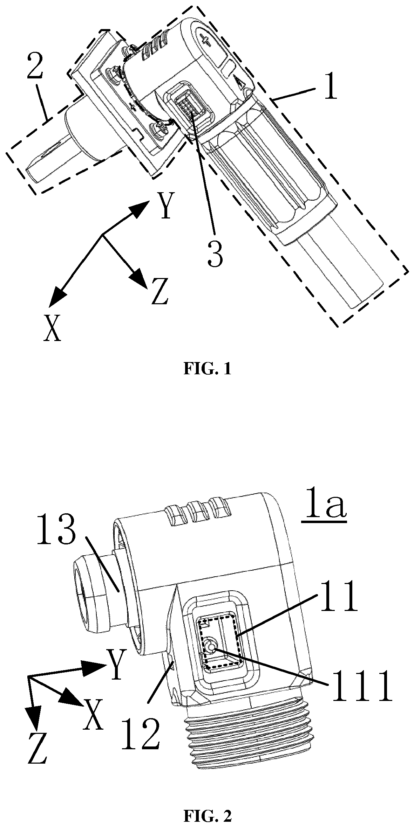

Referring to FIGS. 2, 3 and 4, the button 3 further has a guiding hole 31 extending along the second direction X, and the guiding hole 31 and the locking structure 33 are arrange along the third direction Z. A guiding portion 111 extending along the second direction X is formed on a bottom of the cavity 11. The guiding portion 111 is used to cooperate with the guiding hole 31, ensuring that the button 3 can be arranged in the male connector 1. An elastic component 112 is sleeved on the guiding portion 111. The elastic component 112 may be a spring. When the button 3 is arranged in the male connector 1, the elastic component 112 and the guiding portion 111 are located in the guiding hole 31. With the elastic component 112, when the button 3 is pressed along the second direction X inwards the cavity 11, the elastic component 112 can apply a force in an opposite direction, causing the button 3 to be ejected from the cavity 11, thereby facilitating usage of the button 3. In the energy storage connector as described above, the button 3 and the elastic component 112 form a two-piece unlocking structure in which a retainer plate is omitted, comparing with the three-piece unlocking structure including a button, a spring and a retainer plate. In this way, assembly processes for the energy storage connector can be simplified, and manpower for the energy storage connector can be reduced. Moreover, due to the optimization of structure of the button 3, the engagement using the button 3 can be simpler and more practical, thereby ensuring the secure engagement of the male connector 1 and the female connector 2.

Referring to FIGS. 2 and 6, the male connector 1 further has, on the side facing to the female connector 2, a limiting hole 12 extending along the first direction Y and communicating with the cavity 11. A shape of the limiting hole 12 may be a cuboid. The button 3 has, on a side close to the limiting hole 12, a limiting portion 32 cooperating with the limiting hole 12. When the button 3 is arranged in the male connector 1, the limiting portion 32 is engaged in the limiting hole 12, ensuring the locking of the male connector 1 with the female connector 2. When user is intended to eject the button 3 from the male connector 1, the button 3 is pressed inwards the cavity 11 along the second direction X, and at the same time, the limiting portion 32 is pressed inwards the cavity 11 along the first direction Y. At this time, the limiting portion 32 is no longer engaged with the limiting hole 12. With a force in an opposite direction applied by the elastic component 112 which is subjected to a force, the button 3 is ejected from the cavity 11, thereby facilitating usage of the button 3.

Referring to FIGS. 4, 5 and 6, the button 3 has a first surface 301 and a second surface 302 joined with the first surface 301, the first surface 301 is perpendicular to the first direction Y, the second surface 302 is perpendicular to the third direction Z. At least a part of each of the first surface 301 and the second surface 302 is planar. The limiting portion 32 is formed on the first surface 301 and protrudes from the first surface 301. The button 3 further has a third surface 303 parallel to the second surface 302. In the third direction Z, a distance between the third surface 303 and the limiting portion 32 is smaller than a distance between the second surface 302 and the limiting portion 32. The locking portion 331 is formed on the second surface 302. In the first direction Y, an orthographic projection of the locking portion 331 on the button 3 does not overlap with an orthographic projection of the limiting portion 32 on the button 3. In the second direction X, an orthographic projection of the locking portion 331 on the button 3 does not overlap with an orthographic projection of the limiting portion 32 on the button 3. In the third direction Z, an orthographic projection of the locking portion 331 on the button 3 does not overlap with an orthographic projection of the limiting portion 32 on the button 3. In the third direction Z, the locking structure 33 is formed on a side of the third surface 303 away from the guiding hole 31, and the locking structure 33 protrudes from the third surface 303.

Referring to FIGS. 4 and 6, the connection portion 332 is formed at a junction of the first surface 301 and the second surface 302. In the first direction Y, the connection portion 332 is located between the locking portion 331 and the limiting portion 32, and in the first direction Y, an orthographic projection of the connection portion 332 on the button 3 does not overlap with the orthographic projection of the locking portion 331 on the button 3. In the second direction X, the connection portion 332 is located between the locking portion 331 and the limiting portion 32, and in the second direction X, an orthographic projection of the connection portion 332 on the button 3 overlaps with at least a part of the orthographic projection of the locking portion 331 on the button 3. In the third direction Z, the connection portion 332 is located between the locking portion 331 and the limiting portion 32, and in the third direction Z, an orthographic projection of the connection portion 332 on the button 3 does not overlap with the orthographic projection of the locking portion 331 on the button 3. When the male connector 1 is engaged in the female connector 2, the connection portion 332 abuts on an edge of the third portion 25c close to the second portion 25b, and the edge of the third portion 25c close to the second portion 25b has a certain degree of curvature. By designing the connection portion 332 to have a curved surface, damage to the engagement portion 25 during usage of the energy storage connector can be prevented.

Referring to FIG. 6, the button 3 further has a pressing portion 34 arranged on a side of the button 3 away from the guiding portion 111 in the second direction X. The pressing portion 34 is the exposed portion of the button 3 when the button 3 is located inside the male connector 1 and is a force bearing structure. By pressing the pressing portion 34, the button 3 can be arranged inside the male connector 1 and lock the male connector 1 and the female connector 2, or unlock the male connector 1 and the female connector 2. The pressing portion 34 has several protrusions 341 on it. The protrusions 341 can increase friction and tactile impression, thereby preventing fingers or other things from sliding when touching the pressing portion 34, and preventing influence on the force applied on the button 3 along the first direction Y.

Referring to FIG. 6, the button 3 further has a blind hole 35 defined on a side of the button 3 away from the guiding portion 111 and extending along the third direction Z, and the blind hole 35 is defined on a side of the limiting portion 32 away from the guiding hole 31. In the second direction X, an orthographic projection of the blind hole 35 on the button 3 overlaps with at least a part of an orthographic projection of the guiding hole 31 on the button 3. Due to the fact that the button 3 is usually made of plastic or rubber material, there will be some degree of deformation during usage of the button 3. By defining the blind hole 35, deformation space is provided for the button 3, thereby preventing excessive deformation of the button 3 and the resulted influence on usage of the button 3.

Referring to FIGS. 4 and 6, the button 3 further has a hollow portion 36. A part of the hollow portion 36 is defined on the first surface 301, and the hollow portion 36 is defined at a junction of the first surface 301 and a fourth surface 304. The fourth surface 304 is perpendicular to the third direction Z. The hollow portion 36 is defined between the guiding hole 31 and the blind hole 35, and the hollow portion 36 does not communicate with the guiding hole 31 and the blind hole 35. In the second direction X, an orthographic projection of the hollow portion 36 on the button 3 overlaps with at least a part of the orthographic projection of the limiting portion 32 on the button 3. In the first direction Y, the orthographic projection of the limiting portion 32 on the button 3 is located within an orthographic projection of the hollow portion 36 on the button 3. In the third direction Z, an orthographic projection of the hollow portion 36 on the button 3 overlaps with at least a part of the orthographic projection of the limiting portion 32 on the button 3. By defining the hollow portion 36, the limiting portion 32 can be pressed along the first direction Y when the limiting portion 32 cooperates with the limiting hole 12, thereby achieving engagement or disengagement of the limiting portion 32 and the limiting hole 12.

Referring to FIGS. 2, 3, 7 and 8, the energy storage connector is assembled as follows: the male connector 1 is engaged in the female connector 2, then the elastic component 112 is put into the cavity 11 and is sleeved on the guiding portion 111, and finally the button 3 is put into the cavity 11, such that the limiting portion 32 is engaged in the limiting hole 12. The energy storage connector is disassembled as follows: the limiting portion 32 is pressed inwards the cavity 11 along the first direction Y to separate the limiting portion 32 from the limiting hole 12. At the same time, the button 3 is pressed inwards the cavity 11 along the second direction X, such that the button 3 is ejected from the cavity 11 by the elastic component 112. Then the button 3 and the elastic component 112 are removed, and the male connector 1 and the female connector 2 are moved far away from each other, such that the male connector 1 and the female connector 2 are separated from each other.

The energy storage connector provided by the present disclosure has advantages as follows.

In the energy storage connector provided by the present disclosure, the inner surface of the connector housing has at least two engagement grooves arranged at intervals along the circumferential direction of the inner surface, at least one tooth is formed on the outer surface of the engagement portion along the circumferential direction of the outer surface, and the at least one tooth is configured to engage with the at least two engagement grooves. At the start of engaging the male connector with the female connector, the male connector and/or the female connector can be freely rotated to adjust the engagement angle between the male connector and the female connector, thereby ensuring the engagement structure and engagement angle between the male connector and the female connector can be flexibly adjusted according to different usage scenarios. The male connector and the female connector can be locked by engagement of the at least one tooth in the at least two engagement grooves, and the engagement angle between the male connector and the female connector can be fixed, thereby preventing abnormal contact and unstable connection between load equipment and energy storage equipment caused by the rotation of the male connector and/or the female connector during usage of the energy storage connector, and preventing waste of time due to repeatedly unlocking and adjusting, by the user of the energy storage connector, the male connector and/or the female connector to find proper engagement angle.

The energy storage connector according to the first aspect of the present disclosure will be further described with reference to FIGS. 1 to 8 below. Referring to FIGS. 1 to 4, the energy storage connector includes the male connector 1 and the female connector 2 configured to connect to each other. The male connector 1 has the button 3 configured to lock or unlock the female connector 2 and the cavity 11 defined along the second direction X intersecting with the first direction Y. The male connector 1 further has, on the side facing to the female connector 2, the limiting hole 12 extending along the first direction Y and communicating with the cavity 11. The guiding portion 111 extending along the second direction X is formed on the bottom of the cavity 11, and the elastic component 112 is sleeved on the guiding portion 111. The button 3 is arranged in the cavity 11. The guiding hole 31 extending along the second direction X and cooperating with the elastic component 112 is defined on a side of the button 3 close to the guiding portion 111, and the elastic component 112 is arranged in the guiding hole 31. The button 3 has, on a side close to the limiting hole 12, the limiting portion 32 cooperating with the limiting hole 12, and the limiting portion 32 is configured to engage into the limiting hole 12.

Referring to FIG. 1, the energy storage connector according to the first aspect of the present disclosure is used to transmit and store energy by conducting current. The energy storage connector includes the male connector 1 and the female connector 2 configured to connect to each other, the male connector 1 is one end of the energy storage connector and is used to connect with an energy source or load equipment. The female connector 2 is the other end of the energy storage connector and is used to connect with energy storage equipment. Power transmission between the male connector 1 and the female connector 2 is achieved by metal contact. The male connector 1 has a button 3 configured to lock or unlock the female connector 2. With the button 3, the male connector 1 can be locked with or disengaged from the female connector 2.

Referring to FIGS. 2 and 3, the male connector 1 has the cavity 11 defined along the second direction X, and the cavity 11 is configured to receive the button 3. The second direction X may refer to a direction along which the button 3 is ejected from the male connector 1. A shape of the cavity 11 may be a cuboid. The male connector 1 has, on the side facing to the female connector 2, a limiting hole 12 extending along the first direction Y. The second direction X intersects with the first direction Y. In some embodiments, the second direction X is perpendicular to the first direction Y. A shape of the limiting hole 12 may be a cuboid. The limiting hole 12 communicates with the cavity 11. The guiding portion 111 extending along the second direction X is formed on the bottom of the cavity 11. The guiding portion 111 is used to cooperate with the button 3, ensuring that the button 3 can be arranged in the male connector 1. The elastic component 112 is sleeved on the guiding portion 111. The elastic component 112 may be a spring. With the elastic component 112, when the button 3 is pressed along the second direction X inwards the cavity 11, the elastic component 112 can apply a force in an opposite direction, causing the button 3 to be ejected from the cavity 11, thereby facilitating usage of the button 3.

Referring to FIGS. 2 to 4, the button 3 is arranged in the cavity 11. The button 3 has, on a side close to the guiding portion 111, the guiding hole 31 extending along the second direction X and configured to cooperate with the elastic component 112. When the button 3 is arranged in the male connector 1, the elastic component 112 and the guiding portion 111 are located in the guiding hole 31. The button 3 has, on a side close to the limiting hole 12, a limiting portion 32 cooperating with the limiting hole 12. When the button 3 is arranged in the male connector 1, the limiting portion 32 is engaged in the limiting hole 12, ensuring the locking state. When user is intended to eject the button 3 from the male connector 1, the button 3 is pressed inwards the cavity 11 along the second direction X, and at the same time, the limiting portion 32 is pressed inwards the cavity 11 along the first direction Y. At this time, the limiting portion 32 is no longer engaged with the limiting hole 12. With a force in an opposite direction applied by the elastic component 112 which is subjected to a force, the button 3 is ejected from the cavity 11, thereby facilitating usage of the button 3.

Referring to FIG. 3, both the male connector 1 and the female connector 2 may be made of metal materials, including, but not limited to, copper, aluminum, or copper alloys. Copper has advantages such as hardness, wear resistance, good ductility, and corrosion resistance. Aluminum has advantages such as strong corrosion resistance, wear resistance, weather resistance, and high hardness. Copper alloys have advantages such as low cost, good mechanical properties and corrosion resistance, and beautiful color and appearance. The button 3 may be made of materials such as plastic or rubber. Plastic has advantages such as light weight, stable chemical properties, corrosion resistance, impact resistance, good insulation, and low processing cost. Rubber has advantages such as elasticity, wear resistance, cold resistance, resistance to air leakage, good insulation and durability, and prevention of current leakage. The materials and manufacturing methods of the male connector 1, the female connector 2 and the button 3 belong to prior art in the art and will not be described in detail here.

Referring to FIGS. 2 to 4, the energy storage connector is assembled as follows: the elastic component 112 is put into the cavity 11 and is sleeved on the guiding portion 111, and then the button 3 is put into the cavity 11, such that the limiting portion 32 is engaged in the limiting hole 12. The energy storage connector is disassembled as follows: the limiting portion 32 is pressed inwards the cavity 11 along the first direction Y to separate the limiting portion 32 from the limiting hole 12. At the same time, the button 3 is pressed inwards the cavity 11 along the second direction X, such that the button 3 is ejected from the cavity 11 by the elastic component 112. Then the button 3 and the elastic component 112 are removed, and the male connector 1 and the female connector 2 are separated from each other.

In some embodiments, in a third direction Z, the button 3 has, on a side away from the guiding hole 31, a locking structure 33. The third direction Z intersects with the first direction Y and with the second direction X. The locking structure 33 has a locking portion 331 and a connection portion 332 connected to the locking portion 331.

Referring to FIGS. 3 and 4, in the third direction Z, the button 3 has, on the side away from the guiding hole 31, the locking structure 33. The third direction Z intersects with the first direction Y and with the second direction X. In some embodiments, any one of the third direction Z, the first direction Y and the second direction X is perpendicular to the other two. The locking structure 33 is used to come in contact with the male connector 1 and the female connector 2, in order to implement locking and unlocking of the male connector 1 and the female connector 2. The locking structure 33 has the locking portion 331 and the connection portion 332 connected to the locking portion 331. When the male connector 1 is engaged in the female connector 2, a part of the engagement portion 25 is engaged in the male connector 1, thus the locking structure 33 can cooperate with the engagement portion 25. The locking portion 331 is engaged with the second portion 25b of the engagement portion 25, and the connection portion 332 abuts on an edge of the third portion 25c close to the second portion 25b. In this way, the engagement portion 25 can be held by the locking structure 33 along the first direction Y, thereby preventing the female connector 2 from disengaging from the male connector 1. By providing the locking structure 33, locking and unlocking between the male connector 1 and the female connector 2 can be implemented.

In some embodiments, the button 3 has a first surface 301 and a second surface 302 joined with the first surface 301, the first surface 301 is perpendicular to the first direction Y, the second surface 302 is perpendicular to the third direction Z. The limiting portion 32 is formed on the first surface 301, and the locking portion 331 is formed on the second surface 302. In the first direction Y, an orthographic projection of the locking portion 331 on the button 3 does not overlap with an orthographic projection of the limiting portion 32 on the button 3. In the second direction X, an orthographic projection of the locking portion 331 on the button 3 does not overlap with an orthographic projection of the limiting portion 32 on the button 3. In the third direction Z, an orthographic projection of the locking portion 331 on the button 3 does not overlap with an orthographic projection of the limiting portion 32 on the button 3.

Referring to FIGS. 4 and 5, the button 3 has a first surface 301 and a second surface 302 joined with the first surface 301, the first surface 301 is perpendicular to the first direction Y, the second surface 302 is perpendicular to the third direction Z. At least a part of each of the first surface 301 and the second surface 302 is planar. The limiting portion 32 is formed on the first surface 301 and protrudes from the first surface 301. The button 3 further has a third surface 303 parallel to the second surface 302. In the third direction Z, a distance between the third surface 303 and the limiting portion 32 is smaller than a distance between the second surface 302 and the limiting portion 32. The locking portion 331 is formed on the second surface 302. In the first direction Y, an orthographic projection of the locking portion 331 on the button 3 does not overlap with an orthographic projection of the limiting portion 32 on the button 3. In the second direction X, an orthographic projection of the locking portion 331 on the button 3 does not overlap with an orthographic projection of the limiting portion 32 on the button 3. In the third direction Z, an orthographic projection of the locking portion 331 on the button 3 does not overlap with an orthographic projection of the limiting portion 32 on the button 3. In the third direction Z, the locking structure 33 is formed on a side of the third surface 303 away from the guiding hole 31, and the locking structure 33 protrudes from the third surface 303. The female connector 2 has the engagement portion 25, and the engagement portion 25 includes, along the first direction Y, the first portion 25a, the second portion 25b and the third portion 25c connected to each other. The first portion 25a is arranged at the periphery of the female connector 2, and the third portion 25c is arranged inside the female connector 2. When the male connector 1 is engaged in the female connector 2, a part of the engagement portion 25 is engaged in the male connector 1, thus the locking structure 33 can cooperate with the engagement portion 25. The locking portion 331 is engaged with the second portion 25b, thus the locking structure 33 protruding from the third surface 303 can be engaged with the engagement portion 25, thereby preventing the female connector 2 from disengaging from the male connector 1. By providing the locking structure 33, connection between the male connector 1 and the female connector 2 can be implemented.

In some embodiments, the connection portion 332 is formed at a junction of the first surface 301 and the second surface 302. In the first direction Y, the connection portion 332 is located between the locking portion 331 and the limiting portion 32, and in the first direction Y, an orthographic projection of the connection portion 332 on the button 3 does not overlap with the orthographic projection of the locking portion 331 on the button 3. In the second direction X, the connection portion 332 is located between the locking portion 331 and the limiting portion 32, and in the second direction X, an orthographic projection of the connection portion 332 on the button 3 overlaps with at least a part of the orthographic projection of the locking portion 331 on the button 3. In the third direction Z, the connection portion 332 is located between the locking portion 331 and the limiting portion 32, and in the third direction Z, an orthographic projection of the connection portion 332 on the button 3 does not overlap with the orthographic projection of the locking portion 331 on the button 3.

Referring to FIGS. 4 and 6, the connection portion 332 is formed at a junction of the first surface 301 and the second surface 302. In the first direction Y, the connection portion 332 is located between the locking portion 331 and the limiting portion 32, and in the first direction Y, an orthographic projection of the connection portion 332 on the button 3 does not overlap with the orthographic projection of the locking portion 331 on the button 3. In the second direction X, the connection portion 332 is located between the locking portion 331 and the limiting portion 32, and in the second direction X, an orthographic projection of the connection portion 332 on the button 3 overlaps with at least a part of the orthographic projection of the locking portion 331 on the button 3. In the third direction Z, the connection portion 332 is located between the locking portion 331 and the limiting portion 32, and in the third direction Z, an orthographic projection of the connection portion 332 on the button 3 does not overlap with the orthographic projection of the locking portion 331 on the button 3. When the male connector 1 is engaged in the female connector 2, the connection portion 332 abuts on an edge of the third portion 25c close to the second portion 25b, and the edge of the third portion 25c close to the second portion 25b has a certain degree of curvature. By designing the connection portion 332 to have a curved surface, damage to the engagement portion 25 during usage of the energy storage connector can be prevented.

In some embodiments, a length L of the locking portion 331 in the second direction X ranges from 2mm to 4.3mm.

Referring to FIG. 4, the length L of the locking portion 331 in the second direction X ranges from 2mm to 4.3mm. When the length L of the locking portion 331 in the second direction X is smaller than 2mm, the button 3 cannot implement the function of locking. When the length L of the locking portion 331 in the second direction X is larger than 4.3mm, it leads to a change in the position of the connection portion 332, such that the connection portion 332 cannot abuts on the edge of the third portion 25c close to the second portion 25b, thereby affecting the engagement of the male connector 1 and the female connector 2. Therefore, by setting the length of the locking portion 331 in the second direction X within the range of 2mm to 4.3mm, the problems that the button 3 cannot implement the function of locking, and that the connection portion 332 has a changed position and cannot abuts on the edge of the third portion 25c close to the second portion 25b, thereby affecting the engagement of the male connector 1 and the female connector 2 can be addressed. In some embodiments, the length of the locking portion 331 in the second direction X may be 2mm, 2.6mm, 3.2mm, 3.8mm, 4.3mm, or the like.

In some embodiments, the button 3 further has the pressing portion 34 arranged on a side of the button 3 away from the guiding portion 111 in the second direction X.

Referring to FIGS. 1 to 3 and 6, the button 3 further has the pressing portion 34 arranged on a side of the button 3 away from the guiding portion 111 in the second direction X. The pressing portion 34 is the exposed portion of the button 3 when the button 3 is located inside the male connector 1 and is a force bearing structure. By pressing the pressing portion 34, the button 3 can be arranged inside the male connector 1 and lock the male connector 1 and the female connector 2, or unlock the male connector 1 and the female connector 2. The pressing portion 34 has several protrusions 341 on it. The protrusions 341 can increase friction and tactile impression, thereby preventing fingers or other things from sliding when touching the pressing portion 34, and preventing influence on the force applied on the button 3 along the second direction X.

In some embodiments, the button 3 further has a blind hole 35 defined on a side of the button 3 away from the guiding portion 111 and extending along the third direction Z, and the blind hole 35 is defined on a side of the limiting portion 32 away from the guiding hole 31. In the second direction X, an orthographic projection of the blind hole 35 on the button 3 overlaps with at least a part of an orthographic projection of the guiding hole 31 on the button 3.

Referring to FIGS. 2, 4 and 6, the button 3 further has a blind hole 35 defined on a side of the button 3 away from the guiding portion 111 and extending along the third direction Z, and the blind hole 35 is defined on a side of the limiting portion 32 away from the guiding hole 31. In the second direction X, an orthographic projection of the blind hole 35 on the button 3 overlaps with at least a part of an orthographic projection of the guiding hole 31 on the button 3. Due to the fact that the button 3 is usually made of plastic or rubber material, there will be some degree of deformation during usage of the button 3. By defining the blind hole 35, deformation space is provided for the button 3, thereby preventing excessive deformation of the button 3 and the resulted influence on usage of the button 3.

In some embodiments, the button 3 further has a hollow portion 36. A part of the hollow portion 36 is defined on the first surface 301. The hollow portion 36 is defined between the guiding hole 31 and the hollow portion 36 does not communicate with the guiding hole 31 and the blind hole 35. In the second direction X, an orthographic projection of the hollow portion 36 on the button 3 overlaps with at least a part of the orthographic projection of the limiting portion 32 on the button 3. In the first direction Y, the orthographic projection of the limiting portion 32 on the button 3 is located within an orthographic projection of the hollow portion 36 on the button 3. In the third direction Z, an orthographic projection of the hollow portion 36 on the button 3 overlaps with at least a part of the orthographic projection of the limiting portion 32 on the button 3.

Referring to FIGS. 2, 4 and 6, the button 3 further has a hollow portion 36. A part of the hollow portion 36 is defined on the first surface 301, and the hollow portion 36 is defined at a junction of the first surface 301 and the fourth surface 304. The fourth surface 304 is perpendicular to the third direction Z. The hollow portion 36 is defined between the guiding hole 31 and the blind hole 35, and the hollow portion 36 does not communicate with the guiding hole 31 and the blind hole 35. In the second direction X, an orthographic projection of the hollow portion 36 on the button 3 overlaps with at least a part of the orthographic projection of the limiting portion 32 on the button 3. In the first direction Y, the orthographic projection of the limiting portion 32 on the button 3 is located within an orthographic projection of the hollow portion 36 on the button 3. In the third direction Z, an orthographic projection of the hollow portion 36 on the button 3 overlaps with at least a part of the orthographic projection of the limiting portion 32 on the button 3. By defining the hollow portion 36, the limiting portion 32 can be pressed along the first direction Y when the limiting portion 32 cooperates with the limiting hole 12, thereby achieving engagement or disengagement of the limiting portion 32 and the limiting hole 12.

In some embodiments, in the third direction Z, the male connector 1 includes the connector housing 1a, the cable fastener 1b and the cable 1c connected to each other. The third direction Z intersects with the first direction Y and with the second direction X. The connector housing 1a is connected with the female connector 2. The conductive terminal 13 is arranged on a side of the connector housing 1a close to the female connector 2, and the conductive terminal 13 is electrically connected to the cable 1c. The conductive terminal 13 has a hollow structure. A first groove 131 is formed by an interior of the conductive terminal 13, a second groove 132 is formed between an outer surface of the conductive terminal 13 and the connector housing 1a. Both the first groove 131 and the second groove 132 are used to be connected with the female connector 2. The second groove 132 communicates with the cavity 11.

Referring to FIGS. 1, 7 and 8, in the third direction Z, the male connector 1 includes the connector housing 1a, the cable fastener 1b and the cable 1c connected to each other. The third direction Z intersects with the first direction Y and with the second direction X. In some embodiments, any one of the third direction Z, the first direction Y and the second direction X is perpendicular to the other two. The connector housing 1a is used to be connected with the female connector 2. The conductive terminal 13 is arranged on a side of the connector housing 1a close to the female connector 2. The conductive terminal 13 implements the electrical connection between the male connector 1 and the female connector 2, and the conductive terminal 13 is electrically connected to the cable 1c, thereby implementing the conductive function of the entire energy storage connector. The conductive terminal 13 has a hollow structure. The first groove 131 is formed by an interior of the conductive terminal 13, and the first groove 131 is configured to receive the connection plug 251 of the female connector 2. The second groove 132 is formed between an outer surface of the conductive terminal 13 and the connector housing 1a, and the second groove 132 is configured to receive a housing of the engagement portion 25. Both the first groove 131 and the second groove 132 are used to be connected with the female connector 2. The second groove 132 communicates with the cavity 11, in order to ensure that a part of the engagement portion 25 can engage with the button 3 when the male connector 1 is engaged in the female connector 2.

In some embodiments, in the first direction Y, the female connector 2 includes the connection terminal 21, the abutting portion 22, the sealing seat 23, the base 24 and the engagement portion 25 that are connected to each other. The engagement portion 25 has a hollow structure and the connection plug 251 arranged inside the engagement portion 25, the connection plug 251 is configured to electrically connect to the connection terminal 21, and the third groove 252 is formed between an outer surface of the connection plug 251 and the engagement portion 25. The connection plug 251 is engaged in the first groove 131, a part of the engagement portion 25 is engaged in the second groove 132, and the conductive terminal 13 is engaged in the third groove 252.

Referring to FIGS. 7 and 8, in the first direction Y, the female connector 2 includes the connection terminal 21, the abutting portion 22, the sealing seat 23, the base 24 and the engagement portion 25 that are connected to each other. The engagement portion 25 is configured to be engaged with the male connector 1. The sealing seat 23 and the base 24 may be connected to each other by connecting components 4, and the connecting components 4 may be bolts. The engagement portion 25 has a hollow structure and the connection plug 251 arranged inside the engagement portion 25, and the connection plug 251 is configured to electrically connect to the connection terminal 21, thereby implementing the conductive function of the female connector 2. The third groove 252 is formed between an outer surface of the connection plug 251 and the engagement portion 25. The connection plug 251 is engaged in the first groove 131, a part of the engagement portion 25 is engaged in the second groove 132, and the conductive terminal 13 is engaged in the third groove 252, thereby implementing the connection of the male connector 1 and the female connector 2.

Referring to FIGS. 7 and 8, the teeth 210 are formed on the third portion 25c of the engagement portion 25, and each tooth of the teeth 210 has opposing first and second ends, the first end is away from the male connector 1 and is flush with the second side of the engagement portion 25. Each tooth of the teeth has a length between the opposing first and second ends that is smaller than a length of the engagement portion 25 in the first direction Y. The connector housing 1a has, on a side close to the second groove 132, engagement grooves 110 configured to cooperate with the teeth 210. The teeth 210 are used to be engaged into the engagement grooves 110, thereby preventing the engagement of the male connector 1 and the female connector 2 from becoming loose, so as to hold the positions of the male connector 1 and the female connector 2.

Compared with the related technologies, the energy storage connector provided by the present disclosure has advantages as follows.

In the energy storage connector as described above, the button and the elastic component form a two-piece unlocking structure in which a retainer plate is omitted, comparing with the three-piece unlocking structure including a button, a spring and a retainer plate. In this way, assembly processes for the energy storage connector can be simplified, and manpower for the energy storage connector can be reduced. Moreover, due to the optimization of structure of the button, the engagement using the button can be simpler and more practical, thereby ensuring the secure engagement of the male connector and the female connector.

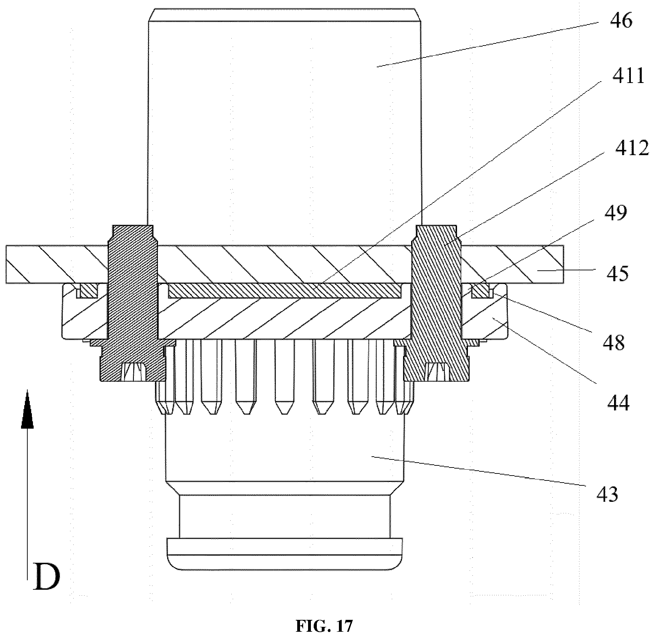

Referring to FIGS. 16, 17 and 28, a second aspect of the present disclosure provides an energy storage connector, including a male connector 41 and a female connector 42 configured to connect to each other. In a fourth direction D, the female connector 42 includes an engagement portion 43, a base 44, a mounting plate 45, an abutting portion 46, and a connection terminal 47. The fourth direction D refers to a direction directing from the male connector 41 to the female connector 42. The engagement portion 43 is connected to the male connector 41. The base 44 has a mounting groove 48 defined on a side of the base 44 close to the mounting plate 45. A bottom of the mounting groove 48 is joined with the abutting portion 46. At least one bump 49 is formed on the bottom of the mounting groove 48, and each bump of the at least one bump 49 has a through-hole 410 defined along the fourth direction D. A surface of an end of each bump of the at least one bump 49 close to the mounting plate 45 is flush with a surface of an end of the base 44 close to the mounting plate 45. A sealing gasket 411 is arranged inside the mounting groove 48, and the sealing gasket 411 has a shape matched with a shape of the mounting groove 48. The mounting plate 45 is mounted on a side of the mounting groove 48 away from the engagement portion 43 by bolts 412.

Referring to FIGS. 16, 17 and 28, the second aspect of the present disclosure provides an energy storage connector, mainly used in scenarios such as energy storage on the power generation ends, energy storage on the power transmission and distribution ends, and energy storage on the user ends. The energy storage connector includes the male connector 41 and the female connector 42 configured to connect to each other. The female connector 42 is mounted on a housing of equipment, and a cable is connected to the male connector 41. With the engagement of the male connector 41 and the female connector 42, electrical connection can be achieved, thereby achieving electrical connection between electrically independent equipment. In the fourth direction D, the female connector 42 includes the engagement portion 43, the base 44, the mounting plate 45, the abutting portion 46, and the connection terminal 47 connected to each other. The fourth direction D refers to a direction directing from the male connector 41 to the female connector 42. The engagement portion 43 is connected to the male connector 41. The base 44 has the mounting groove 48 defined on a side of the base 44 close to the mounting plate 45. The mounting groove 48 is used to accommodate the sealing gasket 411. In some embodiments, along a direction perpendicular to the fourth direction D, a cross-sectional shape of the mounting groove 48 may be rectangular, circular, elliptical, or triangular, which will not be defined in detail here. The bottom of the mounting groove 48 is joined with the abutting portion 46. In some embodiments, the abutting portion 46 is arranged at a center of the bottom of the mounting groove 48, and the abutting portion 46 has a cylinder structure. The abutting portion 46 penetrates through the bottom of the mounting groove 48 on a side of the abutting portion 46 close to the mounting groove 48. The at least one bump 49 is formed on the bottom of the mounting groove 48. The number of the at least one bump 49 may be one, two, four, or six, which will not be defined in detail here. A height of the at least one bump 49 in the fourth direction D may range from 1.15mm to 1.25mm. In some embodiments, there are a plurality of bumps 49 arranged to surround the abutting portion 46. In some embodiments, the plurality of bumps 49 are uniformly arranged along a circumference of the abutting portion 46. Along a direction perpendicular to the fourth direction D, a cross-sectional shape of the at least one bump 48 may be rectangular, circular, elliptical, or triangular, which will not be defined in detail here. In some embodiments, along a direction perpendicular to the fourth direction D, the cross-sectional shape of the at least one bump 48 may be circular. Each bump 49 has the through-hole 410 defined along the fourth direction D. The through-holes 410 are used for the bolts 412 to pass through. A surface of an end of each bump 49 close to the mounting plate 45 is flush with a surface of an end of the base 44 close to the mounting plate 45. The sealing gasket 411 is arranged inside the mounting groove 48. The sealing gasket 411 may be made of rubber material. The sealing gasket 411 has a shape matched with a shape of the mounting groove 48. The mounting plate 45 is mounted on a side of the mounting groove 48 away from the engagement portion 43 by the bolts 412.

In some embodiments, referring to FIG. 16, when the base 44 is rectangular, there are at least two bumps 49. The at least two bumps 49 are arranged to be opposite to each other along diagonal line(s) of the base 44, or the at least two bumps 49 are arranged at the corners of the base 44.

Referring to FIG. 16, when the base 44 is rectangular, there are at least two bumps 49. The least two bumps 49 are arranged to be opposite to each other along diagonal line(s) of the base 44, or the at least two bumps 49 are arranged at the corners of the base 44. That is to say, along a direction perpendicular to the fourth direction D, the cross-sectional shape of the base 44 is rectangular. The number of the at least one bump 49 may be two, four or six, which will not be defined in detail here. The base 44 has two diagonal lines and four corners. The at least two bumps 49 are arranged to be opposite to each other along diagonal line(s) of the base 44, or the at least two bumps 49 are arranged at the at least two corners. In this way, the uniformity of distribution of the bumps 49 on the base 44 can be improved, and the structural strength at the edges of the base 44 can be enhanced. Therefore, during the tightening of the bolts 412, both the base 44 and the bumps 49 can come into contact with the mounting plate 45 and share pressure, thereby further increasing the strength of the force-bearing surface for tightening the bolts 412.

In some embodiments, referring to FIG. 16, there is a gap between each bump of the at least one bump 49 and an inner wall of the mounting groove 48.

Referring to FIG. 16, the sealing gasket 411 is arranged inside the mounting groove 48, and the sealing gasket 411 has a shape matched with a shape of the mounting groove 48. Therefore, the gap between each bump 49 and the inner wall of the mounting groove 48 is filled by the sealing gasket 411. In this way, the contact area between the sealing gasket 411 and the mounting groove 48 or the bump(s) 49 can be increased, and the sealing performance of the sealing gasket 411 can be improved. Moreover, the tightness of engagement between the sealing gasket 411 and the base 44 can be improved, making the sealing gasket 411 less likely to disengage. When the bolts 412 are tightened, the sealing gasket 411 is squeezed, and waterproof effect can be achieved.

In some embodiments, referring to FIG. 16, in the fourth direction D, a ratio of a height of each bump of the at least one bump 49 to a height of the sealing gasket 411 ranges from 0.7 to 0.9.

Referring to FIG. 16, when in the fourth direction D, the ratio of a height of each bump 49 to the height of the sealing gasket 411 is less than 0.7, the sealing gasket 411 is too thick. Due to the fact that the mounting plate 45 is mounted on the mounting groove 48, in order to squeeze the sealing gasket 411 inside the mounting groove 48 to achieve sealing, an excessive thickness of the sealing gasket 411 will make it difficult to establish initial sealing. The squeezing amount of the sealing gasket 411 is limited, which may cause it impossible for the base 44 to come in contact with the mounting plate 45. When in the fourth direction D, the ratio of a height of each bump 49 to the height of the sealing gasket 411 is greater than 0.9, the sealing gasket 411 is too thin. The sealing gasket 411 cannot be fully compressed to fill the gaps in the mounting groove 48, which may lead to the failure of the waterproof structure. Therefore, the ratio of a height of each bump 49 in the fourth direction D to the height of the sealing gasket 411 in the fourth direction D is set within the range of 0.7 to 0.9. In this way, the establishment of the initial sealing can be facilitated, such that the base 44 can come in contact with the mounting plate 45, and the sealing gasket 411 can be fully compressed to fill the gaps in the mounting groove 48, thereby improving the waterproof effect. In some embodiments, in the fourth direction D, the ratio of a height of each bump 49 to the height of the sealing gasket 411 may be 0.7, 0.75, 0.8, 0.85, 0.9, or the like.

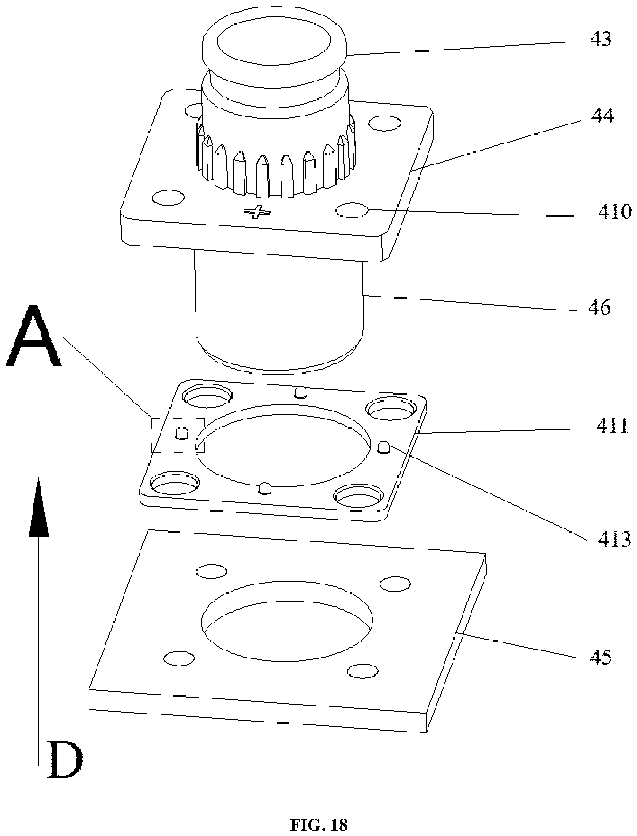

In some embodiments, referring to FIG. 18, the sealing gasket 411 has, on a side close to the engagement portion 43, at least one protrusion 413. An orthographic projection of each protrusion of the at least one protrusion 413 on the sealing gasket 411 does not overlap with an orthographic projection of any one bump of the at least one bump 49 on the sealing gasket 411. At least one accommodating groove 414 cooperating with the at least one protrusion 413 is defined on the bottom of the mounting groove 48, and the at least one protrusion 413 is configured to be engaged in the at least one accommodating groove 414.

Referring to FIG. 18, the sealing gasket 411 has, on a side close to the engagement portion 43, the at least one protrusion 413. In some embodiments, the number of the at least one protrusion 413 is 4 to 8. A height of each protrusion of the at least one protrusion 413 in the fourth direction D may range from 1.45mm to 1.6mm. An orthographic projection of each protrusion of the at least one protrusion 413 on the sealing gasket 411 does not overlap with an orthographic projection of any one bump of the at least one bump 49 on the sealing gasket 411. The at least one accommodating groove 414 cooperating with the at least one protrusion 413 is defined on the bottom of the mounting groove 48, and the at least one protrusion 413 is configured to be engaged in the at least one accommodating groove 414. In this way, the contact area between the sealing gasket 411 and base 44 can be increased, thereby increasing the strength of engagement between the base 44 and the sealing gasket 411, increasing the frictional force between the base 44 and the sealing gasket 411, and further improving the sealing and waterproofing effect. Moreover, the tightness of engagement between the sealing gasket 411 and the base 44 can be improved, so that the sealing gasket 411 is not easily detached from the base 44 before mounting the mounting plate 45.

In some embodiments, referring to FIG. 18, in the fourth direction D, a ratio of a height of each protrusion of the at least one protrusion 413 to a height of the sealing gasket 411 ranges from 0.9 to 1.1.

Referring to FIG. 18, when in the fourth direction D, the ratio of a height of each protrusion 413 to the height of the sealing gasket 411 is less than 0.9, the height of the at least one protrusion 413 is too small, and a length of an engagement part of each protrusion 413 engaging in the mounting groove 48 is too small, causing that the sealing gasket 411 is likely to disengage. When in the fourth direction D, the ratio of a height of each protrusion 413 to the height of the sealing gasket 411 is greater than 1.1, the height of the at least one protrusion 413 is too large, and the depth of the at least one accommodating groove 414 cooperating with the at least one protrusion 413 is too large, affecting the structural strength of the base 44. Therefore, the ratio of a height of each protrusion 413 in the fourth direction D to the height of the sealing gasket 411 in the fourth direction D is set within the range of 0.9 to 1.1. In this way, disengagement of the sealing gasket 411 can be prevented by the cooperation between the at mounting groove 48 and the at least one protrusion 413, and the structural strength of the base 44 can be free of affecting by the excessive depth of the at least one accommodating groove 414. In some embodiments, in the fourth direction D, the ratio of a height of each protrusion 413 to the height of the sealing gasket 411 may be 0.9, 0.95, 1, 1.05, 1.1, or the like.

In some embodiments, referring to FIG. 18, a diameter of each protrusion of the at least one protrusion 413 ranges from 2.6mm to 5.4mm.

Referring to FIG. 18, when the diameter of each protrusion 413 is less than 2.6mm, the contact area between each protrusion and the respective accommodating groove 414 is too small, and the strength of engagement between the base 44 and the sealing gasket 411 cannot be ensured. When the diameter of each protrusion 413 is greater than 5.4mm, the size of the at least one accommodating groove 414 cooperating with the at least one protrusion 413 is too large, affecting the structural strength of the base 44. Therefore, the diameter of each protrusion 413 is set within the range of 2.6mm to 5.4mm. In this way, the strength of engagement between the base 44 and the sealing gasket 411 can be improved, and the structural strength of the base 44 can be not affected. In some embodiments, the diameter of each protrusion 413 may be 2.6mm, 3.0mm, 3.5mm, 4.0mm, 4.5mm, 5.0mm, 5.4mm, or the like.

In some embodiments, referring to FIG. 18, there are at least two protrusions 413, each protrusion of the at least two protrusions 413 is arranged at a middle of a respective lateral wall of the base 44, and the at least two protrusions 413 are arranged to be opposite to each other.

Referring to FIG. 18, there are at least two protrusions 413, each protrusion of the at least two protrusions 413 is arranged at a middle of a respective lateral wall of the base 44, and the at least two protrusions 413 are arranged to be opposite to each other. In some embodiments, along a direction perpendicular to the fourth direction D, a cross-sectional shape of the base 44 may be rectangular, and the number of the at least one protrusion 413 may be two, four, or six, which will not be defined in detail here. The rectangular base 44 has four lateral walls, at least two protrusions 413 are arranged to be opposite to each other, and each protrusion of the at least two protrusions 413 is arranged at a middle of a respective lateral wall of the base 44. In this way, the uniformity of distribution of the protrusions 413 on the base 44 can be improved, and the sealing performance at the edges of base 44 can be enhanced.

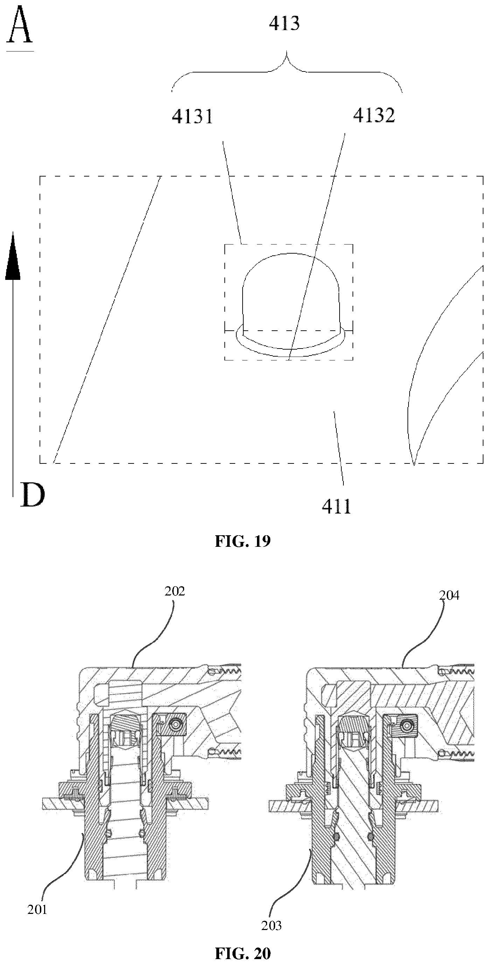

In some embodiments, referring to FIG. 19, each protrusion 413 has a first portion 4131 and a second portion 4132, the second portion 4132 is connected to the first portion 4131 and is located on a side of the first portion 4131 close to the sealing gasket 411. The second portion 4132 is joined with the sealing gasket 411, and the sealing gasket 411 is located on a side of the second portion 4132 away from the first portion 4131. A lateral wall of the second portion 4132 has a cambered surface by denting the lateral wall along a radial direction of the second portion 4132.

Referring to FIG. 19, each protrusion 413 has the first portion 4131 which may be a cylinder. The second portion 4132 is connected to the first portion 4131 and may be a boss. The second portion 4132 is located on a side of the first portion 4131 close to the sealing gasket 411. The second portion 4132 is joined with the sealing gasket 411, and the sealing gasket 411 is located on a side of the second portion 4132 away from the first portion 4131. The lateral wall of the second portion 4132 has a cambered surface by denting the lateral wall along the radial direction of the second portion 4132. The cambered surface may have a radius of 0.3mm. A height of the second portion 4132 in the fourth direction D may be 0.3mm. Each accommodating groove 414 has a shape matching with a shape of each protrusion 413. In this way, each protrusion 413 can engage in a respective accommodating groove 414 smoothly, thereby improving the strength of each protrusion 413, and preventing the protrusion(s) 413 from breaking.

In some embodiments, referring to FIG. 19, a ratio of a height of the first portion 4131 to a height of the second portion 4132 ranges from 3.8 to 4.3.

Referring to FIG. 19, when the ratio of the height of the first portion 4131 to the height of the second portion 4132 is less than 3.8, the height of the first portion 4131 is too small, such that a protrusion 413 is easy to disengage from a corresponding accommodating groove 414. When the ratio of the height of the first portion 4131 to the height of the second portion 4132 is greater than 4.3, the height of the second portion 4132 is too small, such that a protrusion 413 is not easy to be engaged in a corresponding accommodating groove 414, and the protrusion 413 is easy to break. Therefore, the ratio of the height of the first portion 4131 to the height of the second portion 4132 is set within the range of 3.8 to 4.3. In this way, a protrusion 413 can be prevent from disengaging from a corresponding accommodating groove 414, and the strength of each protrusion 413 can be improved, thereby preventing the protrusion(s) 413 from breaking. In some embodiments, the ratio of the height of the first portion 4131 to the height of the second portion 4132 may be 3.8, 3.9, 4.0, 4.1, 4.2, 4.3, or the like.

The energy storage connector provided by the second aspect of the present disclosure at least has advantages as follows.

When the mounting plate 45 is mounted on the mounting groove 48, due to the fact that the surface of the end of each bump 49 close to the mounting plate 45 is flush with a surface of an end of the base 44 close to the mounting plate 45, a surface of the mounting plate 45 close to the base 44 contacts with the surface of the end of each bump 49 close to the mounting plate 45 and with the surface of the end of the base 44 close to the mounting plate 45, and the mounting plate 45, the base 44 and the at least one bump 49 together form a space for accommodating the sealing gasket 411. The base 44 and the mounting plate 45 are connected to each other by bolts 412. Therefore, during the tightening of the bolts 412, both the base 44 and the bumps 49 can come into contact with the mounting plate 45 and share pressure, thereby increasing the area of the force-bearing surface for tightening the bolts 412, improving the structural strength of the base 44, and preventing the base 44 from cracking during the tightening of the bolts 412. Moreover, the tightness of engagement between the sealing gasket 411 and the base 44 can be improved, making the sealing gasket 411 less likely to disengage. When the bolts 412 are tightened, the sealing gasket 411 is squeezed, and waterproof effect can be achieved.

Referring to FIGS. 20 to 25, a third aspect of the present disclosure provides an energy storage connector, including a first male connector 202, a first female connector 201 configured to be connected to the first male connector 202, a second male connector 204, and a second female connector 203 configured to be connected to the second male connector 204.

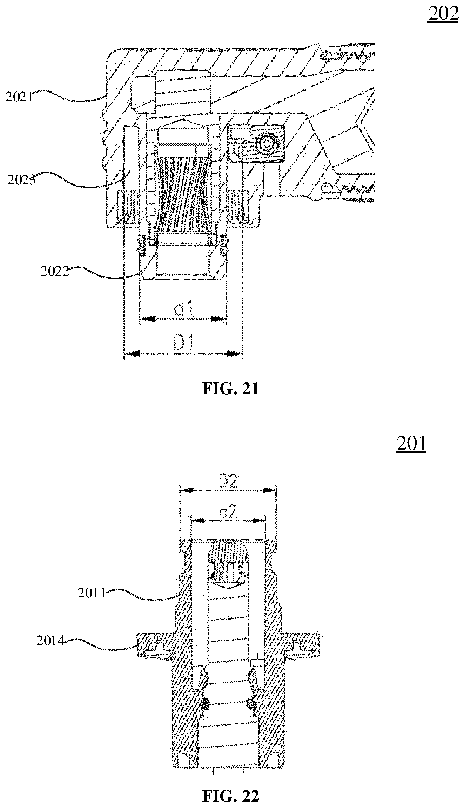

Referring to FIG. 21, the first male connector 202 includes a first insulating outer casing 2021 and a first insulating inner casing 2022. Each of the first insulating outer casing 2021 and the first insulating inner casing 2022 is in a form of a hollow cylinder, and a first cylindrical cavity 2023 is formed between the first insulating outer casing 2021 and the first insulating inner casing 2022. The first insulating outer casing 2021 has an inner diameter of D1, and the first insulating inner casing 2022 has an outer diameter of d1.

Referring to FIG. 22, the first female connector 201 includes a second insulating outer casing 2011 in a form of a hollow cylinder. When the first male connector 202 is connected to the first female connector 201, the second insulating outer casing 2011 is located in the first cylindrical cavity 2023. The second insulating outer casing 2011 has an outer diameter of D2 and an inner diameter of d2.

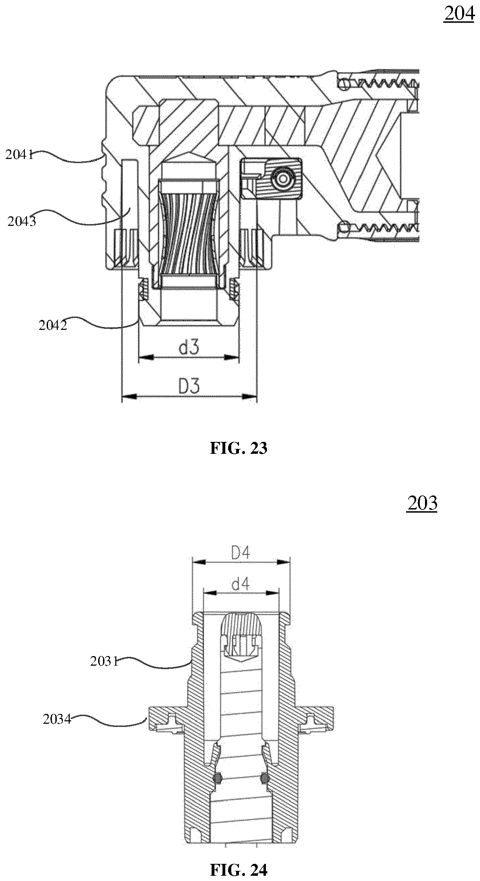

Referring to FIG. 23, the second male connector 204 includes a third insulating outer casing 2041 and a second insulating inner casing 2042. Each of the third insulating outer casing 2041 and the second insulating inner casing 2042 is in a form of a hollow cylinder, and a second cylindrical cavity 2043 is formed between the third insulating outer casing 2041 and the second insulating inner casing 2042. The third insulating outer casing 2041 has an inner diameter of D3, and the second insulating inner casing 2042 has an outer diameter of d3, where D1 is less than D3, and d1 is less than d3.

Referring to FIG. 24, the second female connector 203 includes a fourth insulating outer casing 2031 in a form of a hollow cylinder. When the second male connector 204 is connected to the second female connector 203, the fourth insulating outer casing 2031 is located in the second cylindrical cavity 2043. The fourth insulating outer casing 2031 has an outer diameter of D4 and an inner diameter of d4, where D2 is less than D4, and d2 is less than d4.

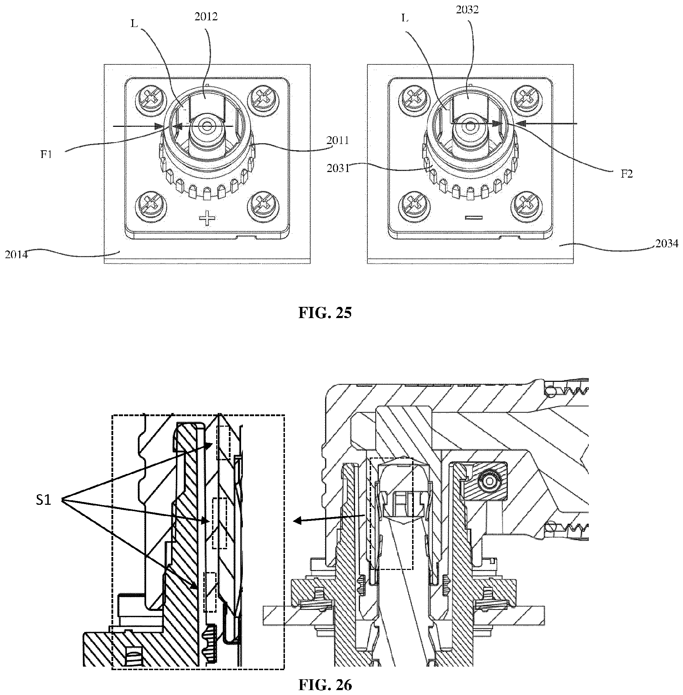

Referring to FIG. 25, the second insulating outer casing 2011 of the first female connector 201 has an inner wall, at least one fourth groove 2012 is defined on the inner wall of the second insulating outer casing 2011. The fourth insulating outer casing 2031 of the second female connector 203 has an inner wall, at least one fifth groove 2032 is defined on the inner wall of the fourth insulating outer casing 2031.

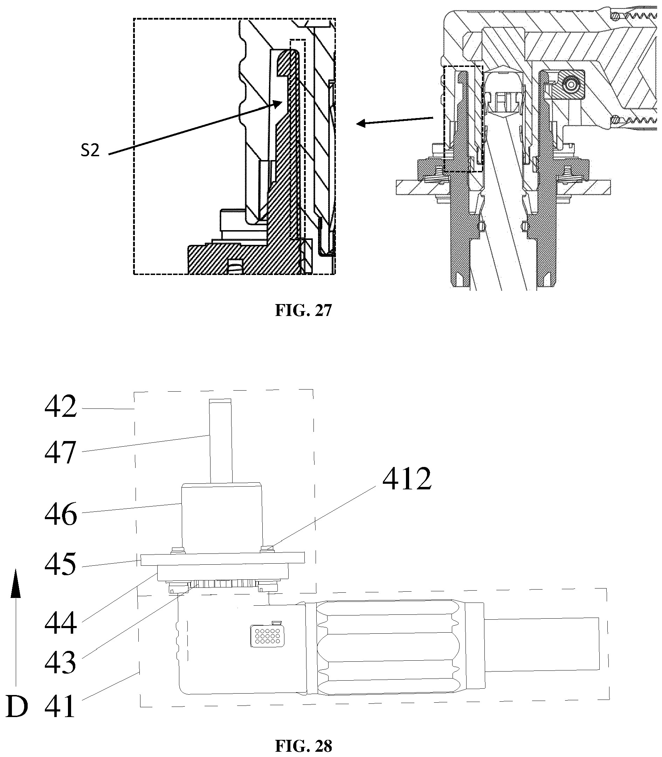

Referring to FIGS. 26 and 27, when a positive male connector is engaged with a negative female connector, interference will occur at regions S1 as shown in FIG. 26. When a negative male connector is engaged with a positive female connector, interference will occur at a region S2 as shown in FIG. 27. In this way, operations of wrong engagement can be prevented by the specific differences in structures of the positive and negative male connectors and the positive and negative female connectors of the energy storage connector according to the present disclosure.

Referring to FIGS. 22, 24 and 25, in some embodiments, in an axial direction of the second insulating outer casing 2011, each fourth groove of the at least one fourth groove 2012 has a length L, and in an axial direction of the fourth insulating outer casing 2031, each fifth groove of the at least one fifth groove 2032 has the length L, and L ranges from 16.3mm to 16.8mm. Specifically, the at least one fourth groove 2012 is defined on the inner wall of the second insulating outer casing 2011 of the first female connector 201, the at least one fifth groove 2032 is defined on the inner wall of the fourth insulating outer casing 2031 of the second female connector 203, the length L of each fourth groove 2012 in the axial direction of the second insulating outer casing 2011 is equal to the length L of each fifth groove 2032 in the axial direction of the fourth insulating outer casing 2031, and L ranges from 16.3mm to 16.8mm. In other words, the length L of each fourth groove 2012 of the first female connector 201 in the axial direction of the second insulating outer casing 2011 is equal to the length L of each fifth groove 2032 of the second female connector 203 in the axial direction of the fourth insulating outer casing 2031, and L is within a range of 16.3mm to 16.8mm. In this way, the at least one fourth groove 2012 can be conducive to the engagement of the first male connector 202 and the first female connector 201, the at least one fifth groove 2032 can be conducive to the engagement of the second male connector 204 and the second female connector 203, and wrong engagement can be further prevented.

Referring to FIGS. 22, 24 and 25, in some embodiments, each fourth groove of the at least one fourth groove 2012 has a depth H in a fifth direction F1, and each fifth groove of the at least one fifth groove 2032 has the depth H in a sixth direction F2. The fifth direction F1 refers to a direction directing from the inner wall of the second insulating outer casing 2011 to an outer wall of the second insulating outer casing 2011, the sixth direction F2 refers to a direction directing from the inner wall of the fourth insulating outer casing 2031 to an outer wall of the fourth insulating outer casing 2031, and H ranges from 0.28mm to 0.43mm. Specifically, each fourth groove 2012 of the first female connector 201 has the depth H in the direction directing from the inner wall of the second insulating outer casing 2011 to the outer wall of the second insulating outer casing 2011, each fifth groove 2032 of the second female connector 203 has the depth H in the direction directing from the inner wall of the fourth insulating outer casing 2031 to the outer wall of the fourth insulating outer casing 2031, and H is within a range of 0.28mm to 0.43mm. When the range is too narrow, the engagement is hard. When the range is too wide, disengagement is likely to occur. Therefore, the at least one fourth groove 2012 and the at least one fifth groove 2032 having the depth H are conducive to the secure engagement of the first male connector 202 and the first female connector 201, to the secure engagement of the second male connector 204 and the second female connector 203, and further to prevention of wrong engagement.

In some embodiments, the first insulating outer casing 2021 and the second insulating outer casing 2011 have a same color, the third insulating outer casing 2041 and the fourth insulating outer casing 2031 have a same color, and the first insulating outer casing 2021 and the third insulating outer casing 2041 have different colors. Specifically, the first insulating outer casing 2021 of the first male connector 202 and the second insulating outer casing 2011 of the first female connector 201 are set to have a same color, and the third insulating outer casing 2041 of the second male connector 204 and the fourth insulating outer casing 2031 of the second female connector 203 are set to have a same color. In this way, visual color differences are conducive to the engagement of the first male connector 202 and the first female connector 201, and to the engagement of the second male connector 204 and the second female connector 203. Moreover, the first insulating outer casing 2021 of the first male connector 202 and the third insulating outer casing 2041 of the second male connector 204 are set to have different colors, and the second insulating outer casing 2011 of the first female connector 201 and the fourth insulating outer casing 2031 of the second female connector 203 are set to have different colors. In other words, the first insulating outer casing 2021 of the first male connector 202 and the second insulating outer casing 2011 of the first female connector 201 are set to have a color different from that of the third insulating outer casing 2041 of the second male connector 204 and the fourth insulating outer casing 2031 of the second female connector 203. In this way, differentiated designs that can distinguish colors visually can help to prevent user's misoperations, such as wrong engagement, which is conducive to user's self-inspection, thereby reducing damage to products and individuals caused by incorrect engagement.

Referring to FIGS. 22, 24 and 25, in some embodiments, the first female connector 201 includes a first fixing plate 2014 arranged to surround the second insulating outer casing 2011 and be connected to the second insulating outer casing 2011. The second female connector 203 includes a second fixing plate 2034 arranged to surround the fourth insulating outer casing 2031 and be connected to the fourth insulating outer casing 2031. Specifically, in the first female connector 201, the first fixing plate 2014 is arranged to surround the second insulating outer casing 2011, and the first fixing plate 2014 is connected to the second insulating outer casing 2011. In the second female connector 203, the second fixing plate 2034 is arranged to surround the fourth insulating outer casing 2031, and the second fixing plate 2034 is connected to the fourth insulating outer casing 2031. In other words, the first fixing plate 2014 is provided to the first female connector 201, and the second fixing plate 2034 is provided to the second female connector 203 .When the first male connector 202 is engaged with the first female connector 201, the first fixing plate 2014 can be used to fix the first male connector 202 and the first female connector 201. When the second male connector 204 is engaged with the second female connector 203, the second fixing plate 2034 can be used to fix the second male connector 204 and the second female connector 203. In this way, secure engagement between the female connector and the male connector of the energy storage connector can be implemented.

In some embodiments, the first fixing plate 2014 and the second insulating outer casing 2011 have a same color, and the second fixing plate 2034 and the fourth insulating outer casing 2031 have a same color. Specifically, in the first female connector 201, the first fixing plate 2014 arranged to surround the second insulating outer casing 2011 and be connected to the second insulating outer casing 2011 is set to have a color same as that of the second insulating outer casing 2011. In the second female connector 203, the second fixing plate 2034 arranged to surround the fourth insulating outer casing 2031 and be connected to the fourth insulating outer casing 2031 is set to have a color same as that of the fourth insulating outer casing 2031. As mentioned above, the second insulating outer casing 2011 and the fourth insulating outer casing 2031 have different colors. In other words, the first fixing plate 2014 and the second insulating outer casing 2011 have a same color, the second fixing plate 2034 and the fourth insulating outer casing 2031 have a same color, and the first fixing plate 2014 and the second insulating outer casing 2011 have a color different from that of the second fixing plate 2034 and the fourth insulating outer casing 2031. In this way, the first fixing plate 2014 and the second fixing plate 2034 can be better distinguished, and visual colors can help to prevent user's wrong engagement.

In some embodiments, the first female connector 201 is a positive female connector, the first male connector 202 is a positive male connector, the second female connector 203 is a negative female connector, and the second male connector 204 is a negative male connector. Specifically, the first female connector 201 may be designed as a positive female connector, the first male connector 202 may be designed as a positive male connector, and the first female connector 201 is engaged with the first male connector 202. In other words, the positive female connector is engaged with the positive male connector. The second female connector 203 may be designed as a negative female connector, the second male connector 204 may be designed as a negative male connector, and the second female connector 203 is engaged with the second male connector 204. In other words, the negative female connector is engaged with the negative male connector. In this way, it is conducive to distinguishing of the positive and negative poles of the energy storage connector.

In some embodiments, a surface of the first fixing plate 2014 has a positive mark, and a surface of the second fixing plate 2034 has a negative mark. Specifically, when the first female connector 201 is designed as a positive female connector, in the first female connector 201, the first fixing plate 2014 arranged to surround the second insulating outer casing 2011 and be connected to the second insulating outer casing 2011 has a positive mark on its surface. When the second female connector 203 is designed as a negative female connector, in the second female connector 203, the second fixing plate 2034 arranged to surround the fourth insulating outer casing 2031 and be connected to the fourth insulating outer casing 2031 has a negative mark on its surface. In this way, user can perform self-inspection using the marks, thereby distinguishing the positive and negative poles of the energy storage connector, and preventing wrong engagement.

In some embodiments, the first female connector 201 is a negative female connector, the first male connector 202 is a negative male connector, the second female connector 203 is a positive female connector, and the second male connector 204 is a positive male connector. Specifically, the first female connector 201 may be designed as a negative female connector, the first male connector 202 may be designed as a negative male connector, and the first female connector 201 is engaged with the first male connector 202. In other words, the negative female connector is engaged with the negative male connector. The second female connector 203 may be designed as a positive female connector, the second male connector 204 may be designed as a positive male connector, and the second female connector 203 is engaged with the second male connector 204. In other words, the positive female connector is engaged with the positive male connector. Thus, polarities of the first female connector 201 and the first male connector 202 can be flexibly designed, and polarities of the second female connector 203 and the second male connector 204 also can be flexibly designed. In this way, positive and negative poles of the energy storage connector can be flexibly designed.

In some embodiments, a surface of the first fixing plate 2014 has a negative mark, and a surface of the second fixing plate 2034 has a positive mark. Specifically, when the first female connector 201 is designed as a negative female connector, in the first female connector 201, the first fixing plate 2014 arranged to surround the second insulating outer casing 2011 and be connected to the second insulating outer casing 2011 has a negative mark on its surface. When the second female connector 203 is designed as a positive female connector, in the second female connector 203, the second fixing plate 2034 arranged to surround the fourth insulating outer casing 2031 and be connected to the fourth insulating outer casing 2031 has a positive mark on its surface. In this way, user can perform self-inspection using the marks, thereby distinguishing the positive and negative poles of the energy storage connector, and preventing wrong engagement.

The energy storage connector provided by the third aspect of the present disclosure at least has advantages as follows.

With the different diameters of the female connector and the male connectors of the energy storage connector, user's operations of wrong engagement can be prevented. The grooves defined on the inner walls of the second insulating outer casing and the fourth insulating outer casing and having a certain depth can be conducive to the engagement of the male connector and the corresponding female connector by preventing too tight engagement. The differentiated designs that can distinguish colors visually can help to prevent user's misoperations, such as wrong engagement, which is conducive to user's self-inspection. Secure engagement of the first female connector and the second female connector of the energy storage connector can be implemented by the first fixing plate and the second fixing plate.

Those having ordinary skill in the art shall understand that the above embodiments are exemplary implementations for realizing the present disclosure. In practice, any person skilled in the art to which the embodiments of the present disclosure belong may make any modifications and changes in forms and details without departing from the scope of the present disclosure. Therefore, the patent scope of protection of the present disclosure shall still be subject to the scope limited by the appended claims.

## Claims

1. An energy storage connector, comprising a male connector and a female connector configured to connect to each other;
wherein the male connector has a connector housing arranged on a side facing the female connector, the connector housing has an inner surface, and the inner surface has at least two engagement grooves arranged at intervals along a circumferential direction of the inner surface;
wherein the female connector has an engagement portion configured to cooperate with the connector housing and a base attached to the engagement portion, the engagement portion has a first side facing the male connector, a second side away from the male connector and abutting the base, an outer surface between the first side and the second side, and at least one tooth formed on the outer surface and arranged along a circumferential direction of the outer surface, and the at least one tooth is configured to engage with the at least two engagement grooves; and
wherein each tooth of the at least one tooth has opposing first and second ends, the first end being away from the male connector and flush with the second side of the engagement portion, and the each tooth of the at least one tooth has a length between the opposing first and second ends that is smaller than a length of the engagement portion in a first direction Y directing from the second side to the first side of the engagement portion.

2. The energy storage connector according to claim 1, wherein in the first direction, a ratio of a length of one respective tooth of the at least one tooth to a length of the engagement portion ranges from 0.312 to 0.337.

3. The energy storage connector according to claim 1, wherein in response to one respective tooth of the at least one tooth engaging into a corresponding engagement groove of the at least two engagement grooves, there is a gap between the one respective tooth and a side wall of the corresponding engagement groove, and a width of the gap along the circumferential direction of the inner surface ranges from 0.15mm to 0.25mm.

4. The energy storage connector according to claim 1, wherein a width of a cross section along the first direction of one respective tooth of the at least one tooth ranges from 1.49mm to 1.69mm.

5. The energy storage connector according to claim 1, having a pre-engagement state and an engagement state;
wherein in response to the energy storage connector being in the pre-engagement state, the at least two engagement grooves are separated from the at least one tooth; and
wherein in response to the energy storage connector being in the engagement state, the at least two engagement grooves engage with the at least one tooth.

6. The energy storage connector according to claim 5, wherein the male connector has a button configured to lock or unlock the female connector and a cavity defined along a second direction intersecting with the first direction, and the button is arranged in the cavity; and
wherein in response to the energy storage connector being in the engagement state, the engagement portion engages with the button.

7. The energy storage connector according to claim 6, wherein along the first direction, the engagement portion includes a first portion, a second portion and a third portion, and the at least one tooth is formed on the third portion;
wherein the second portion has an outer diameter smaller than an outer diameter of the first portion, and the third portion has an outer diameter larger than the outer diameter of the second portion; and
wherein in response to the energy storage connector being in the engagement state, the second portion engages with the button.

8. The energy storage connector according to claim 7, wherein the button includes a locking structure configured to lock or unlock; and
wherein in the first direction, the locking structure has a length smaller than a length of the button, and the length of the locking structure is equal to a length of the second portion.

9. The energy storage connector according to claim 1, wherein the male connector has a button configured to lock or unlock the female connector and a cavity defined along a second direction intersecting with the first direction, the male connector further has, on the side facing to the female connector, a limiting hole extending along the first direction and communicating with the cavity, a guiding portion extending along the second direction is formed on a bottom of the cavity, and an elastic component is sleeved on the guiding portion;
wherein the button is arranged in the cavity, a guiding hole extending along the second direction and cooperating with the elastic component is defined on a side of the button close to the guiding portion, and the elastic component is arranged in the guiding hole; and
wherein the button has, on a side close to the limiting hole, a limiting portion cooperating with the limiting hole, and the limiting portion is configured to engage into the limiting hole.

10. The energy storage connector according to claim 9, wherein the button includes, on a side away from the guiding portion in a third direction, a locking structure, the third direction intersects with the first direction and with the second direction, and the locking structure has a locking portion and a connection portion connected to the locking portion;
wherein the button has a first surface and a second surface joined with the first surface, the first surface is perpendicular to the first direction, the second surface is perpendicular to the third direction, the limiting portion is arranged on the first surface, and the locking portion is formed on the second surface;
wherein in the second direction, an orthographic projection of the locking portion on the button does not overlap with an orthographic projection of the limiting portion on the button;
wherein in the first direction, an orthographic projection of the locking portion on the button does not overlap with an orthographic projection of the limiting portion on the button; and
wherein in the third direction, an orthographic projection of the locking portion on the button does not overlap with an orthographic projection of the limiting portion on the button.

11. The energy storage connector according to claim 10, wherein the connection portion is formed at a junction of the first surface and the second surface;
wherein in the second direction, the connection portion is located between the locking portion and the limiting portion, and in the second direction, an orthographic projection of the connection portion on the button overlaps with at least a part of the orthographic projection of the locking portion on the button;
wherein in the first direction, the connection portion is located between the locking portion and the limiting portion, and in the first direction, an orthographic projection of the connection portion on the button does not overlap with the orthographic projection of the locking portion on the button; and
wherein in the third direction, the connection portion is located between the locking portion and the limiting portion, and in the third direction, an orthographic projection of the connection portion on the button does not overlap with the orthographic projection of the locking portion on the button.

12. The energy storage connector according to claim 10, wherein the button has a blind hole defined on a side of the button away from the guiding portion and extending along the third direction, and the blind hole is defined on a side of the limiting portion away from the guiding hole; and
wherein in the second direction, an orthographic projection of the blind hole on the button overlaps with at least a part of an orthographic projection of the guiding hole on the button.

13. The energy storage connector according to claim 12, wherein the button has a hollow portion defined between the guiding hole and the blind hole, a part of the hollow portion is defined on the first surface, and the hollow portion does not communicate with the guiding hole and the blind hole;
wherein in the second direction, an orthographic projection of the hollow portion on the button overlaps with at least a part of the orthographic projection of the limiting portion on the button;
wherein in the first direction, the orthographic projection of the limiting portion on the button is located within an orthographic projection of the hollow portion on the button; and
wherein in the third direction, an orthographic projection of the hollow portion on the button overlaps with at least a part of the orthographic projection of the limiting portion on the button.

14. The energy storage connector according to claim 9, wherein in a third direction, the male connector includes a connector housing configured to connect with the female connector, a cable fastener and a cable that are connected to each other, and the third direction intersects with the first direction and with the second direction; and
wherein the connector housing has a conductive terminal arranged on a side of the connector housing close to the female connector, the conductive terminal is electrically connected to the cable and has a hollow structure; and
wherein a first groove is formed by an interior of the conductive terminal, a second groove is formed between an outer surface of the conductive terminal and the connector housing, both the first groove and the second groove are configured for the male connector to connect with the female connector, and the second groove communicates with the cavity.

15. The energy storage connector according to claim 14, wherein in the first direction, the female connector includes a connection terminal, an abutting portion, a sealing seat, a base and the engagement portion that are connected to each other;
wherein the engagement portion has a hollow structure and a connection plug arranged inside the engagement portion, the connection plug is configured to electrically connect to the connection terminal, and a third groove is formed between an outer surface of the connection plug and the engagement portion; and
wherein the first groove is configured to receive the connection plug, the second groove is configured to receive a part of the engagement portion, and the third groove is configured to receive the conductive terminal.
